# FASCICULE DE BREVET EUROPEEN

(11) **EP 3 559 338 B1**
(45) Date de publication et mention de la délivrance du brevet: **01.05.2024**
(21) Numéro de dépôt: 17829256.1
(22) Date de dépôt: 20.12.2017
(51) Int. Cl.: D07B 1/06

(54) **CÂBLE MULTI-TORONS À DEUX COUCHES À PÉNÉTRABILITÉ AMÉLIORÉE**
ZWEISCHICHTIGES MEHRADRIGES KABEL MIT VERBESSERTER DURCHLÄSSIGKEIT
TWO-LAYER MULTI-STRAND CABLE WITH IMPROVED PENETRABILITY

(30) Priorité: 20.12.2016 FR 1662938
(43) Date de publication de la demande: 30.10.2019
(73) Titulaire: Compagnie Générale des Etablissements Michelin, 63000 Clermont-Ferrand (FR)
(72) Inventeur: CLEMENT, Emmanuel, 63040 Clermont-Ferrand Cedex 9 (FR); CHEVALLEY, Marianna, 63040 Clermont-Ferrand Cedex 9 (FR); GIANETTI, Alexandre, 63040 Clermont-Ferrand Cedex 9 (FR); LAURENT, Stéphane, 63040 Clermont-Ferrand Cedex 9 (FR); PINAUT, Rémi, 63040 Clermont-Ferrand Cedex 9 (FR)
(74) Mandataire: M.F.P. Michelin
(86) Numéro de dépôt international: PCT/FR2017/053715
(87) Numéro de publication internationale: WO 2018/115728

(56) Documents cités:
- EP-A1- 0 383 716
- EP-A2- 1 126 073
- WO-A1-2009/048054
- WO-A1-2011/064065
- WO-A1-2015/090920
- CN-U- 203 373 487
- JP-A- S5 453 481
- JP-A- 2005 314 833
- US-A1- 2011 209 808
- WOLF G H ET AL: "DER EINFLUSS DER CORDKONSTRUKTION AUF DIE HAFTUNG GUMMI/STAHL", KAUTSCHUK UND GUMMI - KUNSTSTOFFE, HUTHIG VERLAG, HEIDELBERG, DE, vol. 34, no. 5, 1 mai 1981 (1981-05-01), pages 365-370, XP001066486, ISSN: 0948-3276

## Description

L'invention concerne les câbles multi-torons utilisables notamment pour le renforcement de pneumatiques, particulièrement de pneumatiques pour véhicules industriels lourds.

Un pneumatique à armature de carcasse radiale comprend une bande de roulement, deux bourrelets inextensibles, deux flancs reliant les bourrelets à la bande de roulement et une ceinture, ou armature de sommet, disposée circonférentiellement entre l'armature de carcasse et la bande de roulement. Cette armature de sommet comprend plusieurs nappes de composition élastomérique, éventuellement renforcées par des éléments de renfort tels que des câbles ou des monofilaments, de type métallique ou textile.

L'armature de sommet comprend généralement au moins deux nappes de sommet superposées, dites parfois nappes de travail ou nappes croisées, dont les éléments de renfort, en général métalliques, sont disposés pratiquement parallèles les uns aux autres à l'intérieur d'une nappe, mais croisés d'une nappe à l'autre, c'est-à-dire inclinés, symétriquement ou non, par rapport au plan circonférentiel médian, d'un angle qui est généralement compris entre 10° et 45°. Les nappes de travail comprennent généralement des éléments de renfort présentant un très faible allongement de façon à assurer leur fonction de guidage du pneumatique.

L'armature de sommet peut également comprendre diverses autres nappes ou couches de composition élastomérique auxiliaires, de largeurs variables selon les cas, comportant ou non des éléments de renfort. On citera à titre d'exemple des nappes dites de protection chargées de protéger le reste de la ceinture des agressions externes, des perforations, ou encore des nappes dites de frettage comportant des éléments de renfort orientés sensiblement selon la direction circonférentielle (nappes dites à zéro degré), qu'elles soient radialement externes ou internes par rapport aux nappes de travail. Les nappes de protection comprennent généralement des éléments de renfort présentant un allongement élevé de façon à se déformer sous l'effet d'une contrainte exercée par un indenteur, par exemple un rocher.

On connait de l'état de la technique un élément de renfort de nappe de travail comprenant un câble métallique multi-torons à deux couches tel que divulgué dans les exemples de WO2015/090920. Ce câble comprend une couche interne du câble constituée d'un toron interne et une couche externe du câble constituée de six torons externes enroulés en hélice autour de la couche interne du câble.

Chaque toron interne et externe comprend une couche interne du toron constituée d'un unique fil interne, une couche intermédiaire constituée de six fils et une couche externe du toron constituée de onze fils externes. Les couches intermédiaire et externe du toron interne sont enroulées dans le sens S autour respectivement des couches interne et intermédiaire du toron interne. Les couches intermédiaire et externe de chaque toron externe sont enroulées dans le sens Z autour respectivement des couches interne et intermédiaire de chaque toron externe. Les torons externes sont enroulés en hélice autour du toron interne dans un sens d'enroulement du câble, celui-ci étant le sens S. Chaque pas p2, p2' des couches intermédiaire de chaque toron interne et externe est égal à 14 mm et chaque pas p3, p3' de la couche externe de chaque toron interne et externe est égal à 20 mm.

Un autre câble constitué de six torons externes enroulés en hélice autour du toron interne du câble est divulgué dans CN203373487.

Un pneumatique de véhicule industriel lourd, notamment de génie civil, est soumis à de nombreuses agressions. En effet, le roulage de ce type de pneumatique se fait habituellement sur un revêtement accidenté conduisant parfois à des perforations de la bande de roulement. Ces perforations permettent l'entrée d'agents corrosifs, par exemple l'air et l'eau, qui oxydent les éléments de renfort métalliques de l'armature de sommet, notamment des nappes de sommet, et réduisent considérablement la durée de vie du pneumatique.

Une solution pour augmenter la durée de vie du pneumatique est de lutter contre la propagation de ces agents corrosifs. On peut ainsi prévoir de recouvrir chaque couche interne et intermédiaire d'une composition élastomérique lors de la fabrication du câble. Lors de ce procédé, la composition élastomérique présente pénètre dans les capillaires présents entre chaque couche de chaque toron et empêche ainsi la propagation des agents corrosifs. De tels câbles, généralement appelés câbles gommés in situ, sont bien connus de l'état de la technique.

Une autre solution pour augmenter la durée de vie du pneumatique est d'augmenter la force à rupture du câble. Généralement, on augmente la force à rupture en augmentant le diamètre des fils constituant le câble et/ou le nombre de fils et/ou la résistance unitaire de chaque fil. Toutefois, augmenter davantage le diamètre des fils, par exemple au-delà de 0,50 mm, entraine nécessairement une baisse de la flexibilité du câble ce qui n'est pas souhaitable. Augmenter le nombre de fils entraine la plupart du temps une baisse de la pénétrabilité des torons par la composition d'élastomère. Enfin, augmenter la résistance unitaire de chaque fil nécessite des investissements importants dans les installations de fabrication des fils.

L'invention a pour but un câble présentant une pénétrabilité améliorée de son toron interne par la composition d'élastomère par rapport au câble de l'état de la technique permettant ainsi de réduire l'entrée et la propagation des agents corrosifs dans et le long du câble.

### CABLE SELON L'INVENTION

A cet effet, l'invention a pour objet un câble multi-torons à deux couches comprenant :
- une couche interne du câble constituée d'un toron interne à trois couches comprenant :
   - une couche interne constituée de Q= 1 fil interne,
   - une couche intermédiaire constituée de M fils intermédiaires enroulés autour de la couche interne selon un pas p2, et
   - une couche externe constituée de N fils externes enroulés autour de la couche intermédiaire selon un pas p3,
- une couche externe du câble constituée de L>1 torons externes à au moins deux couches comprenant :
   - une couche interne constituée de Q' fil(s) interne(s), et
   - une couche externe constituée de N' fils externes enroulés autour de la couche interne,
dans lequel :
- la couche externe du câble est enroulée autour de la couche interne du câble selon un sens d'enroulement du câble ;
- chaque couche externe de chaque toron interne et externe est enroulée respectivement autour de la couche intermédiaire et interne respectivement de chaque toron interne et externe selon un même sens d'enroulement opposé au sens d'enroulement du câble ;
- la couche externe du câble est désaturée, et;
- les pas p2 et p3 vérifient 0.43 ≤ (p3-p2)/p3 ≤ 0,57.

On rappelle que, de manière connue, le pas d'un toron représente la longueur de ce toron, mesurée parallèlement à l'axe du câble, au bout de laquelle le toron ayant ce pas effectue un tour complet autour dudit axe du câble. De façon analogue, le pas d'un fil représente la longueur de ce fil, mesurée parallèlement à l'axe du toron dans lequel il se trouve, au bout de laquelle le fil ayant ce pas effectue un tour complet autour dudit axe du toron.

Par sens d'enroulement d'une couche de torons ou de fils, on entend le sens formé par les torons ou les fils par rapport à l'axe du câble ou du toron. Le sens d'enroulement est communément désigné par la lettre soit Z, soit S.

Les pas, sens d'enroulement et diamètres des fils et des torons sont déterminés conformément à la norme ASTM D2969-04 de 2014.

Par définition, une couche de torons désaturée est telle qu'il existe suffisamment d'espace entre les torons de façon à permettre le passage d'une composition d'élastomère. Conformément à l'invention, la couche externe de torons est désaturée ce qui signifie que les torons externes ne se touchent pas et qu'il y a suffisamment d'espace entre deux torons externes adjacents permettant le passage d'une composition d'élastomère jusqu'au toron interne. En d'autres termes et toujours par définition, la distance inter-torons de la couche externe de torons externes définie, sur une section du câble perpendiculaire à l'axe principal du câble, comme la distance la plus courte qui sépare, en moyenne, les enveloppes circulaires dans lesquelles sont inscrits deux torons externes adjacents, est non nulle.

De préférence, la distance inter-torons la couche externe de torons externes est supérieure ou égale à 30 µm, plus préférentiellement supérieure ou égale à 40 µm et encore plus préférentiellement supérieure ou égale à 50 µm. Dans un mode de réalisation très préférentiel, la distance inter-torons de la couche externe de torons externes est supérieure ou égale à 70 µm, de préférence supérieure ou égale à 100 µm, plus préférentiellement supérieure ou égale à 150 µm et encore plus préférentiellement supérieure ou égale à 200 µm.

Par « au moins deux couches », on entend que chaque toron externe peut être, dans certains modes de réalisation, à deux couches, c'est-à-dire qu'il comprend uniquement deux couches mais n'en comprend pas uniquement une, ni trois ; et que dans d'autres modes de réalisation, chaque toron externe peut être à trois couches, c'est-à-dire qu'il comprend uniquement trois couches mais n'en comprend pas uniquement deux, ni quatre.

Dans l'invention, le câble est à deux couches de torons c'est-à-dire qu'il comprend un assemblage constitué de deux couches de torons, ni plus ni moins, c'est-à-dire que l'assemblage a deux couches de torons, pas une, pas trois, mais uniquement deux. La couche externe du câble est enroulée autour de la couche interne du câble au contact de la couche interne du câble.

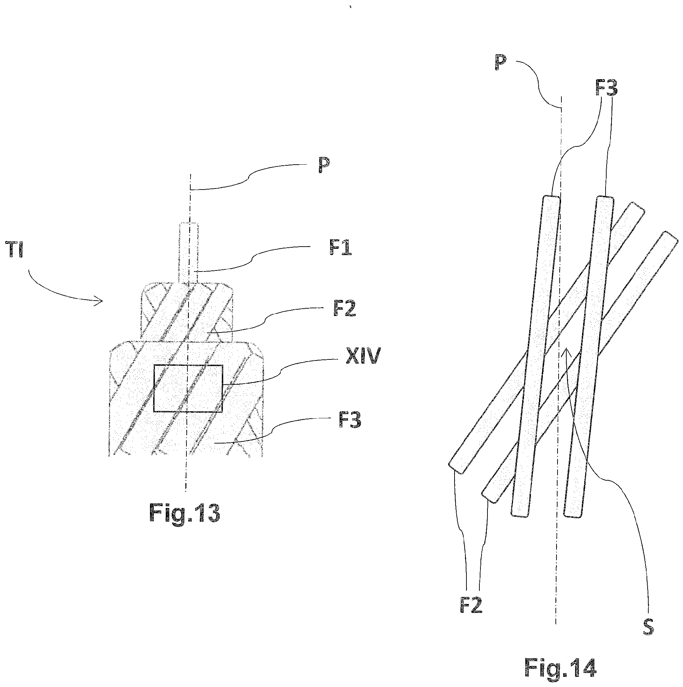

Le câble selon l'invention présente une pénétrabilité améliorée par rapport à un câble dont le rapport (p3-p2)/p3 est en dehors de la plage de rapports conforme à l'invention, comme par exemple le câble des exemples de WO2015/090920 pour lequel le rapport (p3-p2)/p3 est égal à 0,30 et dont la pénétrabilité peut être améliorée grâce à l'invention. Les inventeurs à l'origine de l'invention émettent l'hypothèse que ce rapport permet d'obtenir des fenêtres de passage radial pour la composition d'élastomère relativement grandes au sein du toron interne. Les fenêtres de passage radial sont définies comme étant l'intersection entre d'une part l'espace projeté sur un plan parallèle à l'axe principal du câble entre deux fils adjacents de la couche externe du toron interne et d'autre part l'espace projeté sur un plan parallèle à l'axe principal du câble entre deux fils adjacents de la couche intermédiaire du toron interne. Une telle fenêtre de passage radial est illustrée sur la figure 14.

De plus, grâce à la désaturation de la couche externe du câble, le câble selon l'invention présente des espaces entre les torons externes permettant le passage de la composition d'élastomère. Dans l'état de la technique, on connait des câble présentant une force à rupture relativement élevée en raison de la saturation de la couche externe du câble (les torons externes sont deux à deux au contact les uns des autres) qui forme alors une voûte reprenant les efforts de traction s'exerçant sur le câble. Dans le câble selon l'invention, bien que l'on casse la voûte autour du toron interne, la désaturation de la couche externe du câble permet à la composition d'élastomère de pénétrer d'une part, entre les torons externes et, d'autre part, entre les torons externes et le toron interne. Ainsi, on restaure au moins partiellement la voûte et donc on limite la perte de force à rupture du câble tout en assurant son excellente pénétrabilité. En outre, cette caractéristique permet à la composition d'élastomère de s'infiltrer entre les couches externes des torons interne et externes de façon à créer un matelas de composition d'élastomère absorbant au moins partiellement la composante radiale de la force entre les torons interne et externes.

Conformément à l'invention, le sens d'enroulement du câble opposé aux sens d'enroulement de chaque couche externe de chaque toron interne et externe permet une meilleure pénétrabilité du câble, notamment entre les torons externes. Les inventeurs émettent l'hypothèse que grâce à ces sens d'enroulements, les fils externes des torons externes croisent les fils externes du toron interne en formant une zone de contact relativement ponctuelle contrairement aux câbles des exemples de WO2015/090920 dans lequel le sens d'enroulement du câble est identique aux sens d'enroulement des couches externes de chaque toron interne et externe et dans lequel les fils externes des torons externes croisent les fils externes du toron interne en formant une zone de contact moins ponctuelle et plus linéique, empêchant le passage de la composition d'élastomère jusqu'au toron interne.

De par l'invention et la relation entre p2 et p3, le toron interne est à couches cylindriques. De façon très avantageuse, chaque toron externe est à couches cylindriques que ce toron externe soit à deux ou trois couches. On rappelle que de telles couches cylindriques sont obtenues lorsque les différentes couches d'un toron sont enroulées à des pas différents et/ou lorsque les sens d'enroulement de ces couches sont distincts d'une couche à l'autre. Un toron à couches cylindriques est très fortement pénétrable contrairement à un toron à couches compactes dans lequel les pas de toutes les couches sont égaux et les sens d'enroulement de toutes les couches sont identiques et présente une pénétrabilité bien plus faible.

De façon optionnelle et préférée, dans un mode de réalisation, le câble est dépourvu de toute composition polymérique, notamment le câble est dépourvu de gaine de toute composition polymérique recouvrant le toron interne. Dans un autre mode de réalisation, le câble est dépourvu de toute composition élastomérique, notamment le câble est dépourvu de gaine de toute composition élastomérique recouvrant le toron interne.

Avantageusement, le câble est métallique. Par câble métallique, on entend par définition un câble formé de fils constitués majoritairement (c'est-à-dire pour plus de 50% de ces fils) ou intégralement (pour 100% des fils) d'un matériau métallique. Un tel câble métallique est préférentiellement mise en oeuvre avec un câble en acier, plus préférentiellement en acier perlitique (ou ferrito-perlitique) au carbone désigné ci-après par "acier au carbone", ou encore en acier inoxydable (par définition, acier comportant au moins 11% de chrome et au moins 50% de fer). Mais il est bien entendu possible d'utiliser d'autres aciers ou d'autres alliages.

Lorsqu'un acier au carbone est avantageusement utilisé, sa teneur en carbone (% en poids d'acier) est de préférence comprise entre 0,4% et 1,2%, notamment entre 0,5% et 1,1 % ; ces teneurs représentent un bon compromis entre les propriétés mécaniques requises pour le pneumatique et la faisabilité des fils.

Le métal ou l'acier utilisé, qu'il s'agisse en particulier d'un acier au carbone ou d'un acier inoxydable, peut être lui-même revêtu d'une couche métallique améliorant par exemple les propriétés de mise en oeuvre du câble métallique et/ou de ses éléments constitutifs, ou les propriétés d'usage du câble et/ou du pneumatique eux-mêmes, telles que les propriétés d'adhésion, de résistance à la corrosion ou encore de résistance au vieillissement. Selon un mode de réalisation préférentiel, l'acier utilisé est recouvert d'une couche de laiton (alliage Zn-Cu) ou de zinc.

De préférence, les fils d'une même couche d'un toron prédéterminé (interne ou externe) présentent tous sensiblement le même diamètre. Avantageusement, les torons externes présentent tous sensiblement le même diamètre. Par « sensiblement le même diamètre», on entend que les fils ou les torons ont le même diamètre aux tolérances industrielles près.

Avantageusement, chaque fil de chaque toron présente un diamètre allant de 0,15 mm à 0,60 mm, de préférence de 0,20 mm à 0,50 mm, plus préférentiellement de 0,25 mm à 0,45 mm et encore plus préférentiellement de 0,28 mm à 0,42 mm.

Par composition de polymère ou composition polymérique, on entend que la composition comprend au moins un polymère. De préférence, un tel polymère peut être un thermoplastique, par exemple un polyester ou un polyamide, un polymère thermodurcissable, un élastomère, par exemple du caoutchouc naturel, un élastomère thermoplastique ou un mélange de ces polymères.

Par composition d'élastomère ou composition élastomérique, on entend que la composition comprend au moins un élastomère ou un caoutchouc (les deux termes étant synonymes) et au moins un autre composant. De préférence, la composition d'élastomère comprend également un système de vulcanisation, une charge. Plus préférentiellement, l'élastomère est diénique.

Avantageusement, les torons externes sont enroulés en hélice autour du toron interne selon un pas allant de 40 mm à 100 mm et de préférence allant de 50 mm à 90 mm.

Selon l'invention, les pas p2 et p3 vérifient la relation 0,43 ≤ (p3-p2)/p3. Avantageusement, les pas p2 et p3 vérifient la relation 0,45 ≤ (p3-p2)/p3. Plus le rapport (p3-p2)/p3 est important, autrement dit plus la différence entre p3 et p2 est importante, meilleure est la stabilité architecturale de chaque toron interne. En effet, plus les couches intermédiaire et externe du toron interne présentent des pas différents, plus les fils intermédiaires et externes sont croisés les uns par rapport aux autres (les contacts entre les fils intermédiaires et externes sont alors relativement ponctuels), mieux les fils externes vont tenir mécaniquement les fils intermédiaires et meilleure sera la pénétrabilité du toron interne dont les fils de couches intermédiaire et externe seront alors régulièrement répartis au sein de chaque couche intermédiaire et externe. Cette tenue mécanique permet d'éviter que, d'une part, lors de la fabrication du câble, tous les fils de la couche intermédiaire se regroupent tous au contact les uns des autres sous l'effet des efforts mécaniques exercés par les outils d'assemblage et, d'autre part, que lors de la fabrication d'une nappe comprenant le câble ou du pneumatique comprenant le câble, tous les fils de la couche intermédiaire se regroupent tous au contact les uns des autres sous l'effet de la pression de la composition d'élastomère pénétrant le câble.

En outre, pour un pas p3 donné, en augmentant le rapport (p3-p2)/p3, on réduit la distance interfils de la couche intermédiaire du toron interne. L'homme du métier se serait attendu à observer une baisse de la pénétrabilité du toron externe. Or, de façon complètement inattendue, comme le montrent les essais comparatifs décrits ci-après, en augmentant le rapport (p3-p2)/p3, on diminue certes la distance interfils de la couche intermédiaire du toron interne mais on augmente la dimension des fenêtres de passage radial de la composition d'élastomère de sorte que la pénétrabilité du toron interne est notablement améliorée.

Avantageusement, les pas p2 et p3 vérifient la relation (p3-p2)/p3 ≤ 0,55 et de préférence (p3-p2)/p3 ≤ 0,53. En dessous de ces valeurs, la dimension des fenêtres de passage radial de la composition d'élastomère est maximale et permet d'optimiser la pénétrabilité de chaque toron externe.

De façon avantageuse, le pas p2 est tel que 8 mm ≤ p2 ≤ 16 mm, de préférence 8 mm ≤ p2 ≤ 14 mm et plus préférentiellement 8 mm ≤ p2 ≤ 12 mm.

De façon avantageuse, le pas p3 est tel que 10 mm ≤ p3 ≤ 40 mm, de préférence 15 mm ≤ p3 ≤ 35 mm et plus préférentiellement 15 mm ≤ p3 ≤ 25 mm et encore plus préférentiellement 17 mm ≤ p3 ≤ 23 mm.

Des pas p2 et p3 dans ces plages préférentielles permettent d'obtenir un câble présentant des propriétés mécaniques compatibles avec un usage pneumatique, un coût et une masse linéique du câble relativement faible.

Par définition, le diamètre d'un toron est le diamètre du cercle le plus petit dans lequel est circonscrit le toron.

Le toron interne TI présente un diamètre DI et chaque toron externe TE présente un diamètre DE.

Avantageusement, dans le cas où L=6, DI/DE>1, de préférence DI/DE≥1,05 et plus préférentiellement DI/DE≥1,10. Ainsi, on favorise davantage le passage de la composition d'élastomère entre les torons externes. Avantageusement, dans le cas où L=6, DI/DE≤1,40 et de préférence DI/DE<1,35 et plus préférentiellement DI/DE≤1,30. Ainsi, on évite d'avoir un espace entre les torons externes trop important de façon à assurer d'une part la stabilité architecturale du câble et d'autre part maximiser la force à rupture en mettant le plus de torons externes possibles tout en permettant le passage de la composition d'élastomère entre les torons externes. On limite ainsi le diamètre externe du câble et donc on maximise la masse métal que l'on peut mettre dans une nappe. D'autre part, on réduit l'épaisseur de la nappe et donc l'échauffement, la résistance au roulement et la masse du pneumatique.

De plus, pour ces valeurs préférentielles de DI/DE, en favorisant encore davantage le passage de la composition d'élastomère entre les torons externes, on favorise la restauration de la voûte du câble.

Avantageusement, dans le cas où L=7, DI/DE≥1,30, de préférence DI/DE≥1,35 et plus préférentiellement DI/DE≥1,40. Avantageusement, dans le cas où L=7, DI/DE≤1,70, de préférence DI/DE≤1,65 et plus préférentiellement DI/DE≤1,60.

Avantageusement, dans le cas où L=8, DI/DE≥1,60, de préférence DI/DE≥1,65 et plus préférentiellement DI/DE≥1,70. Avantageusement, dans le cas où L=8, DI/DE≤2,0, de préférence DI/DE≤1,95 et plus préférentiellement DI/DE≤1,90.

Avantageusement, dans le cas où L=9, DI/DE≥2,00, de préférence DI/DE≥2,05 et plus préférentiellement DI/DE≥2,10. Avantageusement, dans le cas où L=9, DI/DE≤2,50, de préférence DI/DE≤2,45 et plus préférentiellement DI/DE≤2,40.

De façon analogue au cas où L=6, pour les cas où L=7, 8 ou 9, pour des valeurs relativement élevées de DI/DE, on favorise davantage le passage de la composition d'élastomère entre les torons externes, et, pour des valeurs relativement basses de DI/DE, on assure la stabilité architecturale du câble, on maximise la force à rupture tout en permettant le passage de la composition d'élastomère entre les torons externes, on limite le diamètre externe du câble, on réduit l'épaisseur de la nappe, donc l'échauffement, la résistance au roulement et la masse du pneumatique. Enfin, on restaure également la voûte du câble.

Dans un mode de réalisation, L est égal à 6, 7, 8, 9 ou 10, de préférence L=6, 7 ou 8 et plus préférentiellement L=6.

Optionnellement, le fil interne du toron interne présente un diamètre d1 supérieur ou égal au diamètre d1' de chaque fil interne de chaque toron externe, de préférence le fil interne du toron interne présente un diamètre d1 égal au diamètre d1' de chaque fil interne de chaque toron externe. Ainsi, on utilise le même diamètre de fil sur les couches internes de chaque toron interne et externe ce qui limite le nombre de fils différents à gérer lors de la fabrication du câble.

Optionnellement, le fil interne du toron interne présente un diamètre d1 supérieur ou égal au diamètre d3' de chaque fil externe de chaque toron externe, de préférence le fil interne du toron interne présente un diamètre d1 supérieur au diamètre d3' de chaque fil externe de chaque toron externe.

Optionnellement, chaque fil externe du toron interne présente un diamètre d3 supérieur ou égal au diamètre d3' de chaque fil externe de chaque toron externe, de préférence chaque fil externe du toron interne présente un diamètre d3 supérieur au diamètre d3' de chaque fil externe de chaque toron externe. Préférentiellement, grâce à la caractéristique d3>d3', chaque fil externe du toron interne peut supporter la composante radiale de la force exercée par les torons externes sur le toron interne lors de la traction du câble. Cette caractéristique d3>d3' permet de restaurer, voire d'améliorer la force rupture du câble par rapport à un câble comprenant une voûte formée par les torons externes ou par rapport à un câble dans lequel d3≤d3'. De préférence, 1 < d3/d3' ≤ 2, plus préférentiellement 1 < d3/d3' ≤ 1,5 et encore plus préférentiellement 1 < d3/d3' ≤ 1,25 ou 1,25 < d3/d3' ≤ 1,5.

Dans un mode de réalisation favorisant le compromis entre pénétrabilité et force à rupture, la couche externe du câble est incomplètement insaturée.

Une couche incomplètement insaturée de torons est telle qu'il n'existe pas suffisamment de place dans cette couche pour y ajouter au moins un (X+1)ième toron du même diamètre que les X torons de la couche. En l'espèce, il n'existe pas suffisamment de place dans la couche externe pour y ajouter au moins un (L+1)ième toron externe du même diamètre que les L torons externes de la couche externe du câble. Ainsi, la somme SIE des distances intertorons E de la couche externe du câble est telle que SIE < DE. La somme SIE est la somme des distances intertorons E séparant chaque couple de torons adjacents de la couche. La distance intertorons d'une couche est définie, sur une section du câble perpendiculaire à l'axe principal du câble, comme la distance la plus courte qui sépare, en moyenne, deux torons adjacents de la couche. Ainsi, la distance intertorons E est calculée en divisant la somme SIE par le nombre d'espaces séparant les torons de la couche.

### Toron interne du câble selon l'invention

Avantageusement, la somme SI2 des distances interfils de la couche intermédiaire du toron interne est telle que SI2 < d3 avec d3 étant le diamètre de chaque fil externe du toron interne, de préférence SI2 ≤ 0,8 x d3. La somme SI2 est la somme des distances interfils séparant chaque couple de fils adjacents de la couche. La distance interfils d'une couche est définie, sur une section du câble perpendiculaire à l'axe principal du câble, comme la distance la plus courte qui sépare, en moyenne, deux fils adjacents de la couche. Ainsi, la distance interfils est calculée en divisant la somme SI2 par le nombre d'espaces séparant les fils de la couche.

Le diamètre d3 des fils externes de la couche externe du toron interne étant préférentiellement supérieur à la somme SI2, on empêche les fils externes de pénétrer dans la couche intermédiaire. On assure ainsi une bonne stabilité architecturale, ce qui réduit le risque de modification des fenêtres de passage radial de la composition d'élastomère et donc le risque de dégrader de la bonne pénétrabilité du toron interne.

De façon avantageuse, la couche intermédiaire du toron interne est désaturée, de préférence incomplètement insaturée.

Par définition, une couche de fils désaturée est telle qu'il existe suffisamment d'espace entre les fils de façon à permettre le passage d'une composition d'élastomère. Ainsi, une couche désaturée signifie que les fils de cette couche ne se touchent pas et qu'il y a suffisamment d'espace entre deux fils adjacents de la couche permettant le passage d'une composition d'élastomère au travers de la couche, c'est-à-dire que la distance interfils de la couche est non nulle.

De préférence, la distance interfils de la couche intermédiaire du toron interne est supérieure ou égale à 5 µm, plus préférentiellement supérieure ou égale à 10 µm, encore plus préférentiellement supérieure ou égale à 20 µm et très préférentiellement supérieure ou égale à 30 µm. Dans un mode de réalisation très avantageux, la distance interfils de la couche intermédiaire de chaque toron externe est supérieure ou égale à 35 µm, plus préférentiellement supérieure ou égale à 50 µm et encore plus préférentiellement supérieure ou égale à 60 µm.

La désaturation de la couche intermédiaire du toron interne permet avantageusement de faciliter la pénétration de la composition d'élastomère dans le toron interne.

Par définition, une couche incomplètement insaturée est telle qu'il n'existe pas suffisamment de place dans cette couche pour y ajouter au moins un (P+1)^{ième} fil du même diamètre que les P fils de la couche. En l'espèce, il n'existe pas suffisamment de place dans la couche intermédiaire pour y ajouter au moins un (M+1)^{ième} fil intermédiaire du même diamètre que les M fils intermédiaire de la couche intermédiaire. En d'autres termes par couche intermédiaire du toron interne incomplètement insaturée, on entend que la somme SI2 des distances interfils I2 de la couche intermédiaire C2 est inférieure au diamètre d2 des fils intermédiaires F2 de la couche intermédiaire C2.

L'insaturation incomplète de la couche intermédiaire du toron interne permet d'assurer une stabilité architecturale de la couche intermédiaire. On réduit ainsi le risque de voir un fil externe venir pénétrer la couche intermédiaire, ce qui modifierait les fenêtres de passage radial de la composition d'élastomère et donc dégraderait la bonne pénétrabilité du toron interne.

En outre, l'insaturation incomplète de la couche intermédiaire du toron interne permet de s'assurer que le toron interne comprend un nombre relativement élevé de fils intermédiaires et donc présente une force à rupture relativement élevée.

De façon avantageuse, la couche externe du toron interne est désaturée, de préférence complètement insaturée. De façon analogue à la couche intermédiaire, la désaturation de la couche externe du toron interne permet avantageusement de faciliter la pénétration de la composition d'élastomère dans le toron interne.

Par définition et comme déjà précisé ci-dessus, une couche de fils désaturée est telle qu'il existe suffisamment d'espace entre les fils de façon à permettre le passage d'une composition d'élastomère. Ainsi, une couche désaturée signifie que les fils de cette couche ne se touchent pas et qu'il y a suffisamment d'espace entre deux fils adjacents de la couche permettant le passage d'une composition d'élastomère au travers de la couche, c'est-à-dire que la distance interfils de la couche est non nulle.

De préférence, la distance interfils de la couche externe du toron interne est supérieure ou égale à 5 µm, plus préférentiellement supérieure ou égale à 10 µm, encore plus préférentiellement supérieure ou égale à 20 µm et très préférentiellement supérieure ou égale à 30 µm. Dans un mode de réalisation très avantageux, la distance interfils de la couche externe du toron interne est supérieure ou égale à 35 µm, plus préférentiellement supérieure ou égale à 50 µm et encore plus préférentiellement supérieure ou égale à 60 µm.

Par définition, une couche complètement insaturée est, par opposition à une couche incomplètement insaturée, telle qu'il existe suffisamment de place dans cette couche pour y ajouter au moins un (P+1)^{ième} fil du même diamètre que les P fils de la couche, plusieurs fils pouvant alors être ou non au contact les uns des autres. En l'espèce, il existe suffisamment de place dans la couche externe du toron interne pour y ajouter au moins un (N+1)^{ième} fil du même diamètre que les N fils externe de la couche externe. En d'autres termes par couche externe du toron interne complètement insaturée, on entend que la somme SI3 des distances interfils I3 de la couche externe C3 est supérieure au diamètre d3 des fils externes F3 de la couche externe C3.

L'insaturation complète de la couche externe du toron interne permet de maximiser la pénétration de la composition d'élastomère dans le toron interne.

Dans un mode de réalisation préféré, Q=1. Dans le mode de réalisation où Q=1 et lorsque le câble est, contrairement à celui de l'invention, insuffisamment pénétré, il existe un risque de voir, sous l'effet des efforts répétés de compression appliqués au câble, le fil interne du toron interne sortir radialement du toron interne et même du câble. Grâce à l'invention, le toron interne étant excellemment bien pénétré et malgré Q=1, la composition d'élastomère agit comme un couche de frettage autour du toron interne, notamment autour des couches externe et intermédiaire du toron interne empêchant la sortie du fil interne même sous des efforts répétés de compression.

Dans un mode de réalisation avantageux, le fil interne du toron interne présente un diamètre d1 supérieur ou égal au diamètre d3 de chaque fil externe du toron interne, de préférence le fil interne du toron interne présente un diamètre d1 supérieur au diamètre d3 de chaque fil externe du toron interne. L'utilisation de diamètres tels que d1>d3 permet de favoriser la pénétrabilité de la composition d'élastomère au travers de la couche externe.

Dans un autre mode de réalisation avantageux, le fil interne du toron interne présente un diamètre d1 supérieur ou égal au diamètre d2 de chaque fil intermédiaire du toron interne, de préférence chaque fil interne du toron interne présente un diamètre d1 supérieur au diamètre d2 de chaque fil intermédiaire du toron interne. L'utilisation préférentielle de diamètres tels que d1>d2 permet de favoriser la pénétrabilité de la composition d'élastomère au travers de la couche intermédiaire.

Dans des modes de réalisation préférés, Q=1, M=5 ou 6 et N=10, 11 ou 12, de préférence Q=1, M=5 ou 6, N=10 ou 11 et plus préférentiellement Q=1, M=6 et N=11.

Plus avantageusement, Q=1, M=5 ou 6, N=10 ou 11,
- le fil interne du toron interne présente un diamètre d1 supérieur ou égal au diamètre d2 de chaque fil intermédiaire du toron interne, et
- le fil interne du toron interne présente un diamètre d1 supérieur ou égal au diamètre d3 de chaque fil externe du toron interne.

Encore plus avantageusement, Q=1, M=6, N=11,
- le fil interne du toron interne présente un diamètre d1 supérieur au diamètre d2 de chaque fil intermédiaire du toron interne, et
- le fil interne du toron interne présente un diamètre d1 supérieur au diamètre d3 de chaque fil externe du toron interne.

Un tel toron interne présente les avantages de stabilité architecturale et de pénétrabilité présentés ci-dessus. En particulier, la désaturation des couches intermédiaire et externe, l'incomplète saturation de la couche intermédiaire et la complète insaturation de la couche externe sont obtenues en utilisant des diamètres différents de fils.

Très avantageusement, chaque fil intermédiaire du toron interne présentant un diamètre d2 et chaque fil externe de chaque toron externe présentant un diamètre d3, d2=d3. Ainsi, on utilise le même diamètre de fil sur les couches intermédiaire et externe du toron interne ce qui limite le nombre de fils différents à gérer lors de la fabrication du câble.

### Torons externes du câble selon l'invention

De façon avantageuse, la couche externe de chaque toron externe est désaturée, de préférence complètement insaturée. La désaturation de la couche externe de chaque toron externe permet avantageusement de faciliter le passage de la composition d'élastomère dans et au travers de chaque toron externe.

Par définition et comme déjà précisé ci-dessus, une couche de fils désaturée est telle qu'il existe suffisamment d'espace entre les fils de façon à permettre le passage d'une composition d'élastomère. Ainsi, une couche désaturée signifie que les fils de cette couche ne se touchent pas et qu'il y a suffisamment d'espace entre deux fils adjacents de la couche permettant le passage d'une composition d'élastomère au travers de la couche, c'est-à-dire que la distance interfils de la couche est non nulle.

De préférence, la distance interfils de la couche externe de chaque toron externe est supérieure ou égale à 5 µm, plus préférentiellement supérieure ou égale à 10 µm, encore plus préférentiellement supérieure ou égale à 20 µm et très préférentiellement supérieure ou égale à 30 µm. Dans un mode de réalisation très avantageux, la distance interfils de la couche externe de chaque toron externe est supérieure ou égale à 35 µm, plus préférentiellement supérieure ou égale à 50 µm et encore plus préférentiellement supérieure ou égale à 60 µm.

La couche externe de chaque toron externe est préférentiellement complètement insaturée, c'est-à-dire qu'il existe suffisamment de place dans la couche externe pour y ajouter au moins un (N'+1)^{ième} fil du même diamètre que les N' fils de la couche externe. En d'autres termes par couche externe de chaque toron externe complètement insaturée, on entend que la somme SI3' des distances interfils I3' de la couche externe C3' est supérieure au diamètre d3' des fils externes F3' de la couche externe C3'.

L'insaturation complète de la couche externe de chaque toron externe permet de maximiser la pénétration de la composition d'élastomère dans et au travers de chaque toron externe.

Ainsi, la haute pénétrabilité des torons externes décrits ci-dessus permet à la composition d'élastomère de pénétrer davantage d'une part, entre les torons externes et, d'autre part, entre les torons externes et le toron interne. Ainsi, on restaure encore davantage au moins partiellement la voûte et donc on limite la perte de force à rupture du câble tout en assurant son excellente pénétrabilité. En outre, cette caractéristique permet à la composition d'élastomère de s'infiltrer entre les couches externes des torons interne et externes de façon à créer un matelas de composition d'élastomère absorbant au moins partiellement la composante radiale de la force entre les torons interne et externes.

Dans des modes de réalisation préférés, chaque fil interne de chaque toron externe présente un diamètre d1' supérieur ou égal au diamètre d3' de chaque fil externe de chaque toron externe.

Dans un mode de réalisation, chaque toron externe est à deux couches. Dans ce mode de réalisation, la couche externe de chaque toron externe est enroulée autour de la couche interne de chaque toron externe au contact de la couche interne de chaque toron externe. Dans ce mode de réalisation, de chaque toron externe comprend un assemblage de fils constitué de deux couches de fils, ni plus ni moins, c'est-à-dire que l'assemblage de fils a deux couches de fils, pas une, pas trois, mais uniquement deux.

Dans un mode de réalisation préféré, Q'>1, de préférence Q'=2, 3 ou 4.

Dans une première variante, Q'=2 et N'=7 ou 8, de préférence Q'=2, N'=7.

Dans une deuxième variante, Q'=3 et N'=7, 8 ou 9, de préférence Q'=3, N'=8.

Dans une troisième variante, Q'=4 et N'=7, 8,9 ou 10, de préférence Q'=4, N'=9.

Très avantageusement, chaque fil interne de chaque toron externe présente un diamètre d1' égal au diamètre d3' de chaque fil externe de chaque toron externe. Ainsi, on utilise préférentiellement le même diamètre de fil sur les couches interne et externe de chaque toron externe ce qui limite le nombre de fils différents à gérer lors de la fabrication du câble.

Dans un premier mode de réalisation du câble, la couche intermédiaire du toron interne est enroulée autour de la couche interne du toron interne selon un sens d'enroulement identique au sens d'enroulement du câble.

Dans une première alternative de ce premier mode de réalisation, dans le cas où Q'>1, la couche interne de chaque toron externe est enroulée en hélice selon un sens d'enroulement identique au sens d'enroulement du câble.

Dans une deuxième alternative de ce premier mode de réalisation, dans le cas où Q'>1, la couche interne de chaque toron externe est enroulée en hélice selon un sens d'enroulement opposé au sens d'enroulement du câble.

Dans un deuxième mode de réalisation du câble, la couche intermédiaire de chaque toron externe est enroulée autour de la couche interne de chaque toron externe selon un sens d'enroulement opposé au sens d'enroulement du câble.

Dans une première alternative de ce deuxième mode de réalisation, dans le cas où Q'>1, la couche interne de chaque toron externe est enroulée en hélice selon un sens d'enroulement identique au sens d'enroulement du câble.

Dans une deuxième alternative de ce deuxième mode de réalisation, dans le cas où Q'>1, la couche interne de chaque toron externe est enroulée en hélice selon un sens d'enroulement opposé au sens d'enroulement du câble. Dans cette deuxième alternative du deuxième mode de réalisation du câble particulièrement préférée, on limite les frottements des fils des couches adjacentes et donc leur usure.

Ainsi, dans le cadre de l'invention, dans le cas de toron externes à 2 couches, on peut envisager les combinaisons de sens d'enroulement rassemblées dans le tableau A ci-dessous:

**Tableau A**

| Câble | | | | | | | | | |
|---|---|---|---|---|---|---|---|---|---|
| | sens C1 | inf | inf | inf | inf | inf | inf | inf | inf |
| Toron interne | sens C2 | S | S | Z | Z | Z | Z | S | S |
| | sens C3 | Z | Z | S | S | Z | Z | S | S |
| Toron externe | sens C1' | S | Z | Z | S | S | Z | Z | S |
| | sens C3' | Z | Z | S | S | Z | Z | S | S |
| Sens d'enroulement du **câble** | | S | S | Z | Z | S | S | Z | Z |

Dans un autre mode de réalisation particulièrement avantageux améliorant la force à rupture du câble, chaque toron externe est à trois couches et comprend :
- une couche intermédiaire constituée de M' fils intermédiaires enroulés autour de la couche interne, et
- une couche externe constituée de N' fils externes enroulés autour de la couche intermédiaire.

Dans ce mode de réalisation, la couche externe de chaque toron externe est enroulée autour de la couche intermédiaire de chaque toron externe au contact de la couche intermédiaire de chaque toron externe et la couche intermédiaire de chaque toron externe est enroulée autour de la couche interne de chaque toron externe au contact de la couche interne de chaque toron externe. Dans ce mode de réalisation, de chaque toron externe comprend un assemblage de fils constitué de trois couches de fils, ni plus ni moins, c'est-à-dire que l'assemblage de fils a trois couches de fils, pas deux, pas quatre, mais uniquement trois.

Avantageusement, la somme SI2' des distances interfils de la couche intermédiaire est telle que SI2' < d3' avec d3' étant le diamètre de chaque fil externe de chaque toron externe, de préférence SI2' ≤ 0,8 x d3'. De façon analogue au toron interne, le diamètre d3' des fils externes de la couche externe de chaque toron externe étant préférentiellement supérieur à la somme SI2', on empêche les fils externes de pénétrer dans la couche intermédiaire. On assure ainsi une bonne stabilité architecturale, ce qui réduit le risque de modification des fenêtres de passage radial de la composition d'élastomère et donc le risque de dégrader de la bonne pénétrabilité de chaque toron externe.

De façon avantageuse, la couche intermédiaire de chaque toron externe est désaturée, de préférence incomplètement insaturée.

Par définition, une couche de fils désaturée est telle qu'il existe suffisamment d'espace entre les fils de façon à permettre le passage d'une composition d'élastomère. Ainsi, une couche désaturée signifie que les fils de cette couche ne se touchent pas et qu'il y a suffisamment d'espace entre deux fils adjacents de la couche permettant le passage d'une composition d'élastomère au travers de la couche, c'est-à-dire que la distance interfils de la couche est non nulle.

De préférence, la distance interfils de la couche intermédiaire de chaque toron externe est supérieure ou égale à 5 µm, plus préférentiellement supérieure ou égale à 10 µm, encore plus préférentiellement supérieure ou égale à 20 µm et très préférentiellement supérieure ou égale à 30 µm. Dans un mode de réalisation très avantageux, la distance interfils de la couche intermédiaire de chaque toron externe est supérieure ou égale à 35 µm, plus préférentiellement supérieure ou égale à 50 µm et encore plus préférentiellement supérieure ou égale à 60 µm.

La désaturation de la couche intermédiaire de chaque toron externe permet avantageusement de faciliter le passage de la composition d'élastomère jusqu'au centre du toron interne.

La couche intermédiaire de chaque toron externe est préférentiellement incomplètement insaturée, c'est-à-dire qu'il n'existe pas suffisamment de place dans la couche intermédiaire pour y ajouter au moins un (M'+1)^{ième} fil du même diamètre que les M' fils de la couche intermédiaire. En d'autres termes par couche intermédiaire de chaque toron externe incomplètement insaturée, on entend que la somme SI2' des distances interfils I2' de la couche intermédiaire C2' est inférieure au diamètre d2' des fils intermédiaires F2' de la couche intermédiaire C2'.L'insaturation incomplète de la couche intermédiaire de chaque toron externe permet d'assurer une stabilité architecturale de la couche intermédiaire. En outre, l'insaturation incomplète de la couche intermédiaire de chaque toron externe permet de s'assurer que de chaque toron externe comprend un nombre relativement élevé de fils intermédiaires et donc présente une force à rupture relativement élevée.

Dans des modes de réalisation préférés, chaque fil interne de chaque toron externe présente un diamètre d1' supérieur au diamètre d3' de chaque fil externe de chaque toron externe. L'utilisation de diamètres tels que d1'>d3' permet de favoriser la pénétrabilité de la composition d'élastomère au travers de la couche externe.

Dans des modes de réalisation préférés, chaque fil interne de chaque toron externe présente un diamètre d1' supérieur ou égal au diamètre d2' de chaque fil intermédiaire de chaque toron externe, de préférence chaque fil interne de chaque toron externe présente un diamètre d1' supérieur au diamètre d2' de chaque fil intermédiaire de chaque toron externe. L'utilisation préférentielle de diamètres tels que d1'>d2' permet de favoriser la pénétrabilité de la composition d'élastomère au travers de la couche intermédiaire.

Dans des variantes préférées de ce mode de réalisation, Q'=1, 2, 3 ou 4, de préférence Q'=1, 2 ou 3 et plus préférentiellement Q'=1 ou 3.

Dans un mode de réalisation préféré, Q'=1.

Dans le mode de réalisation où Q'=1, les M fils intermédiaires sont enroulés autour de la couche interne selon un pas p2' et les N' fils externes sont enroulés autour de la couche intermédiaire selon un pas p3', les pas p2' et p3' vérifiant alors : 0,36 ≤ (p3'-p2')/p3 ≤ 0,57. Un tel rapport (p3'-p2')/p3' permet d'obtenir des fenêtres de passage radial pour la composition d'élastomère relativement grandes au sein de chaque toron externe.

Avantageusement, les pas p2' et p3' vérifient 0,38 ≤ (p3'-p2')/p3', de préférence 0,40 ≤ (p3'-p2')/p3', plus préférentiellement 0,43 ≤ (p3'-p2')/p3' et encore plus préférentiellement 0,45 ≤ (p3'-p2')/p3'. D'une façon analogue au toron interne, plus le rapport (p3'-p2')/p3' est important, autrement dit plus la différence entre p3' et p2' est importante, meilleure est la stabilité architecturale de chaque toron externe.

Avantageusement, les pas p2' et p3' vérifient (p3'-p2')/p3' ≤ 0,55 et de préférence (p3'-p2')/p3' ≤ 0,53. En dessous de ces valeurs, la dimension des fenêtres de passage radial de la composition d'élastomère est maximale et permet d'optimiser la pénétrabilité de chaque toron externe.

De plus, la haute pénétrabilité des torons externes décrits ci-dessus permet à la composition d'élastomère de pénétrer davantage d'une part, entre les torons externes et, d'autre part, entre les torons externes et le toron interne. Ainsi, on restaure encore davantage au moins partiellement la voûte.

De façon avantageuse, le pas p2' est tel que 8 mm ≤ p2' ≤ 16 mm, de préférence 8 mm ≤ p2' ≤ 14 mm et plus préférentiellement 8 mm ≤ p2'≤ 12 mm.

De façon avantageuse, le pas p3' est tel que 10 mm ≤ p3' ≤ 40 mm, de préférence 15 mm ≤ p3' ≤ 35 mm, plus préférentiellement 15 mm ≤ p3' ≤ 25 mm et encore plus préférentiellement 17 mm ≤ p3' ≤ 23 mm.

Des pas p2' et p3' dans ces plages préférentielles permettent d'obtenir un câble présentant des propriétés mécaniques compatibles avec un usage pneumatique, un coût et une masse linéique du câble relativement faible.

Dans un mode de réalisation préféré, Q'=1, M'=5 ou 6 et N'=10, 11 ou 12, de préférence Q'=1, M'=5 ou 6, N'=10 ou 11 et plus préférentiellement Q'=1, M'=6 et N'=11.

Plus avantageusement,
- Q'=1, M'=5 ou 6, N'=10 ou 11,
- le fil interne de chaque toron externe présente un diamètre d1' supérieur ou égal au diamètre d2' de chaque fil intermédiaire de chaque toron externe, et
- le fil interne de chaque toron externe présente un diamètre d1' supérieur ou égal au diamètre d3' de chaque fil externe de chaque toron externe.

Encore plus avantageusement,
- Q'=1, M'=6, N'=11,
- le fil interne de chaque toron externe présente un diamètre d1' supérieur au diamètre d2' de chaque fil intermédiaire de chaque toron externe, et
- le fil interne du toron interne présente un diamètre d1' supérieur au diamètre d3' de chaque fil externe de chaque toron externe.

De tels torons externes présentent les avantages de stabilité architecturale et de pénétrabilité présentés ci-dessus. En particulier, la désaturation des couches intermédiaire et externe, l'incomplète saturation de la couche intermédiaire et la complète insaturation de la couche externe sont obtenues en utilisant des diamètres différents de fils.

Dans un autre mode de réalisation préféré, Q'=3, M'=8 ou 9 et N'=13, 14 ou 15, de préférence Q'=3, M'=8 ou 9, N'=14 ou 15, plus préférentiellement Q'=3, M'=9, N'=14 ou 15 et encore plus préférentiellement Q'=3, M'=9 et N'=15. Dans le mode de réalisation où Q=3 et lorsque le câble est, insuffisamment pénétré, il existe un risque de voir, une très forte propagation des agents corrosifs entre les Q'=3 fils internes qui délimitent un capillaire central très favorable à leur propagation le long du câble. Dans le mode de réalisation où Q'=3 et lorsque le câble est excellemment bien pénétré, la composition d'élastomère empêche les agents corrosifs d'accéder au capillaire central, et dans le meilleur des cas où le capillaire central est lui-même pénétré, la propagation de ces agents corrosifs le long du câble.

Plus avantageusement,
- Q'=3, M'=8 ou 9, N'=14 ou 15,
- les fils internes de chaque toron externe présentent un diamètre d1' supérieur ou égal au diamètre d2' de chaque fil intermédiaire de chaque toron externe, et
- les fils internes de chaque toron externe présentent un diamètre d1' supérieur ou égal au diamètre d3' de chaque fil externe de chaque toron externe.

Encore plus avantageusement,
- Q'=3, M'=9, N'=14 ou 15,
- les fils internes de chaque toron externe présentent un diamètre d1' supérieur au diamètre d2' de chaque fil intermédiaire de chaque toron externe, et
- les fils internes de chaque toron externe présentent un diamètre d1' supérieur au diamètre d3' de chaque fil externe de chaque toron externe.

De tels torons externes présentent les avantages de stabilité architecturale et de pénétrabilité présentés ci-dessus. En particulier, la désaturation des couches intermédiaire et externe, l'incomplète saturation de la couche intermédiaire et la complète insaturation de la couche externe sont obtenues en utilisant des diamètres différents de fils.

Optionnellement, le fil interne du toron interne présente un diamètre d1 supérieur ou égal au diamètre d2' de chaque fil intermédiaire de chaque toron externe, de préférence le fil interne du toron interne présente un diamètre d1 supérieur au diamètre d2' de chaque fil intermédiaire de chaque toron externe.

Très avantageusement, chaque fil intermédiaire de chaque toron externe présentant un diamètre d2' et chaque fil externe de chaque toron externe présentant un diamètre d3', d2'=d3'. Ainsi, on utilise le même diamètre de fil sur les couches intermédiaire et externe de chaque toron externe ce qui limite le nombre de fils différents à gérer lors de la fabrication du câble.

De préférence, chaque fil intermédiaire du toron interne présente un diamètre d2 supérieur ou égal au diamètre d2' de chaque fil intermédiaire de chaque toron externe, de préférence chaque fil intermédiaire du toron interne présente un diamètre d2 supérieur au diamètre d2' de chaque fil intermédiaire de chaque toron externe.

Dans un premier mode de réalisation du câble, la couche intermédiaire du toron interne est enroulée autour de la couche interne du toron interne selon un sens d'enroulement identique au sens d'enroulement du câble.

Dans une première alternative de ce premier mode de réalisation, la couche intermédiaire de chaque toron externe est enroulée autour de la couche interne de chaque toron externe selon un sens d'enroulement identique au sens d'enroulement du câble.

Dans une deuxième alternative de ce premier mode de réalisation, la couche intermédiaire de chaque toron externe est enroulée autour de la couche interne de chaque toron externe selon un sens d'enroulement opposé au sens d'enroulement du câble.

Dans chacune des première et deuxième alternatives décrites ci-dessus de ce premier mode de réalisation, dans le cas où Q'>1, la couche interne de chaque toron externe est enroulée en hélice selon un sens d'enroulement identique au sens d'enroulement du câble ou, en variante, selon un sens d'enroulement opposé au sens d'enroulement du câble.

Dans un deuxième mode de réalisation du câble, la couche intermédiaire du toron interne est enroulée autour de la couche interne du toron interne selon un sens d'enroulement opposé au sens d'enroulement du câble.

Dans une première alternative de ce deuxième mode de réalisation, la couche intermédiaire de chaque toron externe est enroulée autour de la couche interne de chaque toron externe selon un sens d'enroulement identique au sens d'enroulement du câble.

Dans une deuxième alternative de ce deuxième mode de réalisation, la couche intermédiaire de chaque toron externe est enroulée autour de la couche interne de chaque toron externe selon un sens d'enroulement opposé au sens d'enroulement du câble. Dans cette deuxième alternative du deuxième mode de réalisation du câble particulièrement préférée, on limite les frottements des fils des couches adjacentes et donc leur usure.

Dans chacune des première et deuxième alternatives décrites ci-dessus de ce deuxième mode de réalisation, dans le cas où Q'>1, la couche interne de chaque toron externe est enroulée en hélice selon un sens d'enroulement identique au sens d'enroulement du câble ou, en variante, selon un sens d'enroulement opposé au sens d'enroulement du câble.

Ainsi, dans le cadre de l'invention dans le cas de torons externes à 3 couches, on peut envisager les combinaisons de sens d'enroulement rassemblées dans le tableau B ci-dessous, avec ND signifiant que :
- dans le cas d'une couche interne de chaque toron externe constituée d'un unique fil, le fil n'a pas de sens car son pas est infini, et
- dans le cas d'une couche interne de chaque toron externe constituée de plusieurs fils (Q'>1), le sens d'enroulement peut être indifféremment S ou Z :

**Tableau B**

| Câble | | | | | | | | | |
|---|---|---|---|---|---|---|---|---|---|
| Toron interne | sens C1 | ND | ND | ND | ND | ND | ND | ND | ND |
| | sens C2 | S | Z | Z | S | S | Z | Z | S |
| | sens C3 | Z | Z | S | S | Z | Z | S | S |
| Toron externe | sens C1' | inf | inf | inf | inf | inf | inf | inf | inf |
| sens C3' | sens C2' | | S | Z | Z | Z | Z | S | S |
| | | | Z | S | S | Z | Z | S | S |
| Sens c'enroulenent du câble | | S | S | Z | Z | S | S | Z | Z |

Dans un mode de réalisation, chaque toron externe est du type gommé in situ. Un tel toron comprend, avant assemblage du câble, une couche d'une composition de polymère, notamment une composition d'élastomère agencée entre au moins deux couches de fils radialement adjacentes, éventuellement entre chaque couche de fils radialement adjacentes. Un tel toron gommé in situ est notamment décrit dans WO2010/054790.

Dans un autre mode de réalisation, chaque toron externe est du type non gommé in situ. Par non gommé in situ, on entend qu'avant assemblage du câble, chaque toron externe est constitué des fils des différentes couches et dépourvu de composition de polymère, notamment de composition d'élastomère.

### PNEUMATIQUE SELON L'INVENTION

Un autre objet de l'invention est un pneumatique comprenant au moins un câble tel que défini ci-dessus.

De préférence, le pneumatique comporte une armature de carcasse ancrée dans deux bourrelets et surmontée radialement par une armature de sommet elle-même surmontée d'une bande de roulement, l'armature de sommet étant réunie auxdits bourrelets par deux flancs et comportant au moins un câble tel que défini ci-dessus.

Dans un mode de réalisation préféré, l'armature de sommet comprend une armature de protection et une armature de travail, l'armature de travail comprenant au moins un câble tel que défini ci-dessus, l'armature de protection étant radialement intercalée entre la bande de roulement et l'armature de travail.

Le câble est tout particulièrement destiné à des véhicules industriels choisis parmi des véhicules lourds tels que "Poids lourd" - i.e., métro, bus, engins de transport routier (camions, tracteurs, remorques), véhicules hors-la-route -, engins agricoles ou de génie civil, autres véhicules de transport ou de manutention.

De manière préférentielle, le pneumatique est pour véhicule de type génie civil. Ainsi, le pneumatique présente une dimension dans laquelle le diamètre, en pouces, du siège de la jante sur laquelle le pneumatique est destiné à être monté est supérieur ou égal à 40 pouces.

L'invention sera mieux comprise à la lecture de la description qui va suivre, donnée uniquement à titre d'exemple non limitatif et faite en se référant aux dessins dans lesquels :
- la figure 1 est une vue en coupe perpendiculaire à la direction circonférentielle d'un pneumatique selon l'invention ;
- la figure 2 est une vue de détails de la zone II de la figure 1 ;
- les figures 3 et 4 sont des vues schématiques en coupe perpendiculaire à l'axe du câble (supposé rectiligne et au repos) de câbles [(0.38+(6+11)x0.35)+6x(0.38+(6+11)x0.30)]+0.28 selon respectivement des premier et deuxième modes de réalisation de l'invention ;
- les figures 5 et 6 sont des vues analogues à celle des figures 3 et 4 de câbles [(0.38+(6+12)x0.35)+6x(0.38+(6+12)x0.30)]+0.28 selon respectivement des troisième et quatrième modes de réalisation l'invention ;
- la figure 7 est une vue analogue à celle de la figure 3 d'un câble [(0.38+(6+11)x0.35)+6x((2+7)x0.40)]+0.28 selon un cinquième mode de réalisation de l'invention ;
- la figure 8 est une vue analogue à celle de la figure 3 d'un câble [(0.38+(6+11)x0.35)+6x((3+8)x0.38)]+0.28 selon un sixième mode de réalisation de l'invention ;
- la figure 9 est une vue analogue à celle de la figure 3 d'un câble [(0.38+(6+11)x0.35)+6x((4+9)x0.35)]+0.28 selon un septième mode de réalisation de l'invention ;
- la figure 10 est une vue analogue à celle de la figure 3 d'un câble [(1+5) x0.35+11x0.30)+6x(0.38+(6+11)x0.30)]+0.28 selon un huitième mode de réalisation de l'invention ;
- la figure 11 est une vue analogue à celle de la figure 3 d'un câble [0.45+(6+11 x0.38)+6x((3+9+15)x0.30)]+0.28 selon un neuvième mode de réalisation de l'invention ;
- la figure 12 est une vue analogue à celle de la figure 3 d'un câble [(0.38+(6+11)x0.35)+7x((2+7)x0.32)]+0.28 selon un dixième mode de réalisation de l'invention ;
- la figure 13 est une vue schématique en projection sur un plan comprenant l'axe du toron interne avant assemblage du câble selon le premier mode de réalisation de l'invention ; et
- la figure 14 est une vue de détails de la zone XIV représentant une fenêtre de passage radial délimitée par des fils d'une couche intermédiaire et des fils d'une couche externe du toron externe de la figure 13.

Tout intervalle de valeurs désigné par l'expression « entre a et b » représente le domaine de valeurs allant de plus de a à moins de b (c'est-à-dire bornes a et b exclues) tandis que tout intervalle de valeurs désigné par l'expression « de a à b » signifie le domaine de valeurs allant de la borne « a » jusqu'à la borne « b » c'est-à-dire incluant les bornes strictes « a » et « b ».

### EXEMPLE DE PNEUMATIQUE SELON L'INVENTION

Dans les figures, on a représenté un repère X, Y, Z correspondant aux orientations habituelles respectivement axiale (X), radiale (Y) et circonférentielle (Z) d'un pneumatique.

Le « plan circonférentiel médian » M du pneumatique est le plan qui est normal à l'axe de rotation du pneumatique et qui se situe à équidistance des structures annulaires de renfort de chaque bourrelet.

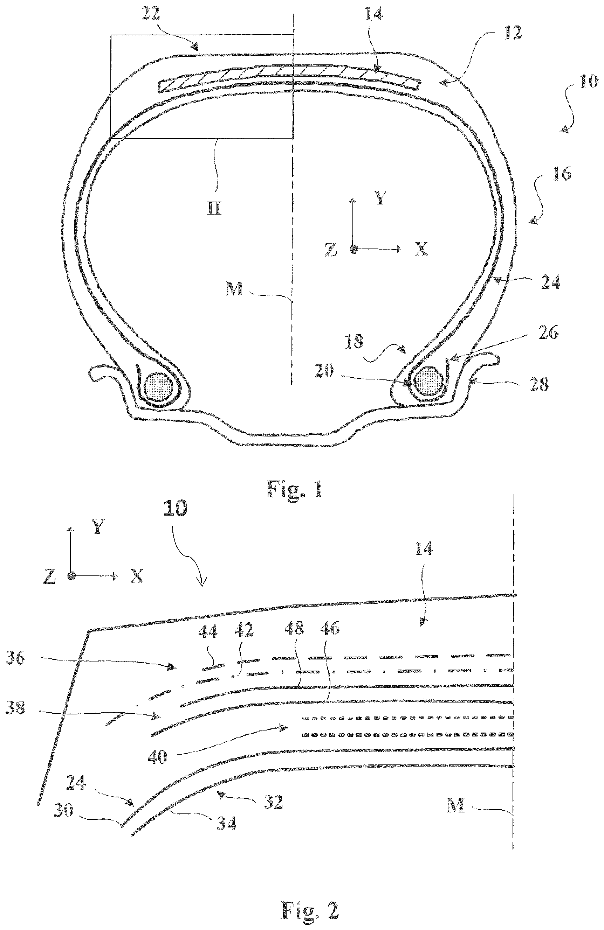

On a représenté sur les figures 1 et 2 un pneumatique selon l'invention et désigné par la référence générale 10.

Le pneumatique 10 est pour véhicule lourd de type génie civil, par exemple de type « dumper ». Ainsi, le pneumatique 10 présente une dimension de type 53/80R63.

Le pneumatique 10 comporte un sommet 12 renforcé par une armature de sommet 14, deux flancs 16 et deux bourrelets 18, chacun de ces bourrelets 18 étant renforcé avec une structure annulaire, ici une tringle 20. L'armature de sommet 14 est surmontée radialement d'une bande de roulement 22 et réunie aux bourrelets 18 par les flancs 16. Une armature de carcasse 24 est ancrée dans les deux bourrelets 18, et est ici enroulée autour des deux tringles 20 et comprend un retournement 26 disposé vers l'extérieur du pneumatique 20 qui est ici représenté monté sur une jante 28. L'armature de carcasse 24 est surmontée radialement par l'armature de sommet 14.

L'armature de carcasse 24 comprend au moins une nappe de carcasse 30 renforcée par des câbles de carcasse radiaux (non représentés). Les câbles de carcasse sont agencés sensiblement parallèlement les uns aux autres et s'étendent d'un bourrelet 18 à l'autre de manière à former un angle compris entre 80° et 90° avec le plan circonférentiel médian M (plan perpendiculaire à l'axe de rotation du pneumatique qui est situé à mi-distance des deux bourrelets 18 et passe par le milieu de l'armature de sommet 14).

Le pneumatique 10 comprend également une nappe d'étanchéité 32 constituée d'un élastomère (communément appelée gomme intérieure) qui définit la face radialement interne 34 du pneumatique 10 et qui est destinée à protéger la nappe de carcasse 30 de la diffusion d'air provenant de l'espace intérieur au pneumatique 10.

L'armature de sommet 14 comprend, radialement de l'extérieur vers l'intérieur du pneumatique 10, une armature de protection 36 agencée radialement à l'intérieur de la bande de roulement 22, une armature de travail 38 agencée radialement à l'intérieur de l'armature de protection 36 et une armature additionnelle 40 agencée radialement à l'intérieur de l'armature de travail 38. L'armature de protection 36 est ainsi radialement intercalée entre la bande de roulement 22 et l'armature de travail 38. L'armature de travail 38 est radialement intercalée entre l'armature de protection 36 et l'armature additionnelle 40.

L'armature de protection 36 comprend des première et deuxième nappes de protection 42, 44 comprenant des câbles métalliques de protection, la première nappe 42 étant agencée radialement à l'intérieur de la deuxième nappe 44. De façon optionnelle, les câbles métalliques de protection font un angle au moins égal à 10°, de préférence allant de 10° à 35° et préférentiellement de 15° à 30° avec la direction circonférentielle Z du pneumatique.

L'armature de travail 38 comprend des première et deuxième nappes de travail 46, 48, la première nappe 46 étant agencée radialement à l'intérieur de la deuxième nappe 48. Chaque nappe 46, 48 comprend au moins un câble 50. De façon optionnelle, les câbles métalliques 50 de travail sont croisés d'une nappe de travail à l'autre et font un angle au plus égal à 60°, de préférence allant de 15° à 40° avec la direction circonférentielle Z du pneumatique.

L'armature additionnelle 40, également appelée bloc limiteur, dont la fonction est de reprendre en partie les sollicitations mécaniques de gonflage, comprend, par exemple et de façon connue en soi, des éléments de renfort métalliques additionnels, par exemple tels que décrits dans FR 2 419 181 ou FR 2 419 182 faisant un angle au plus égal à 10°, de préférence allant de 5° à 10° avec la direction circonférentielle Z du pneumatique 10.

### CABLE SELON UN PREMIER MODE DE REALISATION DE L'INVENTION

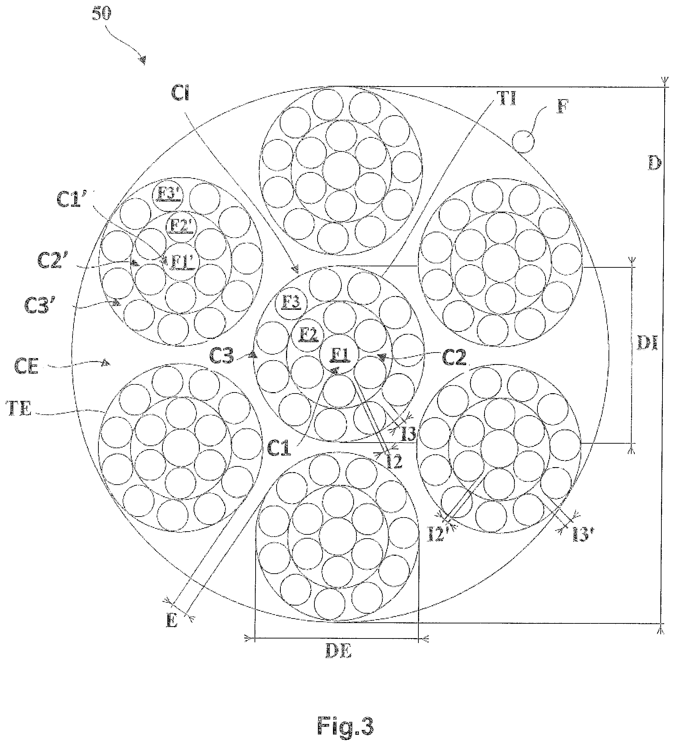

On a représenté sur la figure 3 le câble 50 selon un premier mode de réalisation de l'invention.

Le câble 50 est métallique et est du type multi-torons à deux couches cylindriques. Ainsi, on comprend que les couches de torons constituant le câble 50 sont au nombre de deux, ni plus, ni moins. Les couches de torons sont adjacentes et concentriques. Le câble 50 est dépourvu de composition polymérique et de composition d'élastomère lorsqu'il n'est pas intégré au pneumatique.

Le câble 50 comprend une couche interne CI du câble 50 ainsi qu'une couche externe CE du câble 50. La couche interne CI est constituée d'un unique toron interne TI. La couche externe CE est constituée de L>1 torons externes, c'est-à-dire plusieurs torons externes TE. En l'espèce, L=6, 7, 8, 9 ou 10, de préférence L=6, 7 ou 8 et en l'espèce L=6.

Le câble 50 comprend également une frette F constituée d'un unique fil de frette.

Le toron interne TI présente un pas infini.

La couche externe CE est enroulée autour de la couche interne CI selon un sens d'enroulement du câble, ici le sens S. Les torons externes TE sont enroulés en hélice autour du toron interne TI selon un pas p tel que 40 mm ≤ p ≤ 100 mm et de préférence 50 mm ≤ p ≤ 90 mm. Ici p=70 mm.

La frette F est enroulée autour de la couche externe CE selon un sens d'enroulement de la frette, ici opposé au sens d'enroulement du câble, en l'espèce dans le sens Z. Le fil de frette est enroulé en hélice autour des torons externes TE selon un pas pf tel que 2 mm ≤ pf ≤ 10 mm et de préférence 3 mm ≤ pf ≤ 8 mm. Ici pf=5,1 mm.

L'assemblage constitué par les couches interne CI et externe CE, c'est-à-dire le câble 50 sans la frette F, présente un diamètre D supérieur ou égal à 4 mm et inférieur ou égal à 6 mm, de préférence à 5 mm et plus préférentiellement à 4,3 mm. Ici, D= 4,9 mm.

La couche externe CE du câble 50 est désaturée. La distance E inter-torons moyenne séparant deux torons externes TE adjacents est supérieure ou égale à 30 µm, plus préférentiellement supérieure ou égale à 40 µm et encore plus préférentiellement supérieure ou égale à 50 µm. Dans ce mode de réalisation, la distance inter-torons de la couche externe de torons externes est supérieure ou égale à 70 µm. Ici, E=87,3 µm.

Le toron interne TI présente un diamètre DI et chaque toron externe TE présente un diamètre DE tels que le rapport DI/DE>1, de préférence DI/DE≥1,05 et plus préférentiellement DI/DE≥1,10. Ce rapport DI/DE est également tel que DI/DE≤1,40 et de préférence DI/DE≤1,35 et plus préférentiellement DI/DE≤1,30. En l'espèce, DI=1,78 mm, DE=1,58 mm et DI/DE=1,13.

La couche externe CE du câble 50 est incomplètement insaturée. En effet, SIE=6 x 0,087=0,52 mm, valeur inférieure à DE=1,58 mm.

### Toron interne TI du câble 50

Le toron interne TI est à trois couches. Ainsi, le toron interne TI comprend, ici est constitué, de trois couches, pas plus, pas moins.

Le toron interne TI comprend une couche interne C1 constituée de Q=1 fil interne, une couche intermédiaire C2 constituée de M fils intermédiaires F2 enroulés en hélice autour de la couche interne C1 et une couche externe C3 constituée de N fils externes F3 enroulés en hélice autour de la couche interne C1 et autour et au contact de la couche intermédiaire C2.

Q=1, M=5 ou 6 et N=10, 11 ou 12, de préférence ici Q=1, M=5 ou 6 et N=10 ou 11 et ici Q=1, M=6, N=11.

Le fil interne F1 présente un pas infini.

La couche intermédiaire C2 du toron interne TI est enroulée autour de la couche interne C1 du toron interne TI selon un sens d'enroulement Z opposé au sens d'enroulement S du câble. Les M fils intermédiaires F2 sont enroulés en hélice autour du fil interne F1 selon un pas p2 tel que 8 mm ≤ p2 ≤ 16 mm, de préférence 8 mm ≤ p2 ≤ 14 mm et plus préférentiellement 8 mm ≤ p2 ≤ 12 mm. Ici p2=10 mm.

La couche externe C3 du toron interne TI est enroulée autour de la couche intermédiaire C2 du toron interne TI selon un sens d'enroulement Z opposé au sens d'enroulement S du câble et dans le même sens Z que la couche intermédiaire C2 du toron externe TI. Les N fils externes F3 sont enroulés en hélice autour des M fils intermédiaires F2 selon un pas p3 tel que 10 mm ≤ p3 ≤ 40 mm, de préférence 15 mm ≤ p3 ≤ 35 mm, plus préférentiellement 15 mm ≤ p3 ≤ 25 mm et encore plus préférentiellement 17 mm ≤ p3 ≤ 23 mm. Ici p3=20 mm.

Les pas p2 et p3 vérifient 0,43 ≤ (p3-p2)/p3 ≤ 0,57.

de préférence 0,45 ≤ (p3-p2)/p3.

(p3-p2)/p3 ≤ 0,55 et de préférence (p3-p2)/p3 ≤ 0,53.

En l'espèce, (p3-p2)/p3=0,50.

La couche intermédiaire C2 du toron interne TI est désaturée et incomplètement insaturée. La distance interfils I2 de la couche intermédiaire C2 séparant en moyenne les M fils intermédiaires est supérieure ou égale à 5 µm et ici égale à 8,2 µm. La couche intermédiaire C2 étant incomplètement insaturée, la somme SI2 des distances interfils I2 de la couche intermédiaire C2 est inférieure au diamètre d2 des fils intermédiaire F2 de la couche intermédiaire C2. Ici, la somme SI2=6 x 0,0082 = 0,05 mm, valeur strictement inférieure à d2 = 0,35 mm

La somme SI2 des distances interfils I2 de la couche intermédiaire C2 est inférieure au diamètre d3 des fils externes F3 de la couche externe C3 et de préférence inférieur ou égal à 0,8 x d3. Ici, la somme SI2=6 x 0,0082=0,05 mm, valeur strictement inférieure à d3=0,35 mm.

La couche externe C3 du toron interne TI est désaturée et complètement insaturée. La distance interfils I3 de la couche externe C3 séparant en moyenne les N fils externes est supérieure ou égale à 5 µm. De préférence, la distance interfils I3 est supérieure ou égale à 10 µm, plus préférentiellement supérieure ou égale à 20 µm et encore plus préférentiellement à 30 µm. Dans ce mode de réalisation, la distance interfils I3 est de préférence supérieure ou égale à 35 µm et ici égale à 45 µm. La somme SI3 des distances interfils I3 de la couche externe C3 est supérieure au diamètre d3 des fils externes F3 de la couche externe C3. Ici, la somme SI3=11 x 0,045=0,50mm, valeur strictement supérieure à d3=0,35 mm.

Chaque fil interne, intermédiaire et externe du toron interne TI présente respectivement un diamètre d1, d2 et d3. Chaque diamètre des fils interne d1, intermédiaires d2 et externes d3 du toron interne TI va de 0,15 mm à 0,60 mm, de préférence de 0,20 mm à 0,50 mm, plus préférentiellement de 0,25 mm à 0,45 mm encore plus préférentiellement de 0,28 mm à 0,42 mm.

Le fil interne F1 du toron interne TI présente un diamètre d1 supérieur ou égal au diamètre d2 de chaque fil intermédiaire F2 du toron interne TI. Le fil interne F1 du toron interne TI présente un diamètre d1 supérieur ou égal au diamètre d3 de chaque fil externe F3 du toron interne TI. Chaque diamètre d2 de chaque fil intermédiaire F2 du toron interne TI et chaque diamètre d3 de chaque fil externe F3 du toron interne TI sont tels que d2=d3.

En l'espèce, d1>d2 et d1>d3 et d1=0,38 mm, d2=d3=0,35 mm.

### Torons externes TE du câble 50

Chaque toron externe TE est à au moins deux couches. En l'espèce, chaque toron externe TE est à trois couches. Chaque toron externe TE comprend, ici est constitué, de trois couches, pas plus, pas moins.

Chaque toron externe TE comprend une couche interne C1' constituée de Q' fil(s) interne(s) F1', une couche intermédiaire C2' constituée de M' fils intermédiaires F2' enroulés en hélice autour de la couche interne C1' et une couche externe C3' constituée de N' fils externes F3' enroulés en hélice autour de la couche interne C1' et autour et au contact de la couche intermédiaire C2'.

Q'=1, 2, 3 ou 4, de préférence Q'=1, 2 ou 3 et plus préférentiellement ici Q'=1.

Avec Q'=1, M'=5 ou 6 et N'=10, 11 ou 12, de préférence Q'=1, M'=5 ou 6 et N'=10 ou 11 et ici Q'=1, M'=6 et N'=11.

Le fil interne F1' présente un pas infini.

La couche intermédiaire C2' de chaque toron externe TE est enroulée autour de la couche interne C1' de chaque toron externe TE selon un sens d'enroulement Z opposé au sens d'enroulement du câble S. Les M' fils intermédiaires F2' sont enroulés en hélice autour du ou des fil(s) interne(s) F1' selon un pas p2' tel que 8 mm ≤ p2' ≤ 16 mm, de préférence 8 mm ≤ p2' ≤ 14 mm. Ici p2'=14 mm.

La couche externe C3' de chaque toron externe TE est enroulée autour des couches interne C1' et intermédiaire C2' de chaque toron externe TE selon un sens d'enroulement Z opposé au sens d'enroulement du câble S et dans le même sens Z que la couche intermédiaire C2' de chaque toron externe TE. La couche externe C3' de chaque toron externe TE est enroulée autour des couches interne C1' et intermédiaire C2' de chaque toron externe dans le même sens Z que la couche externe C3 du toron interne TI. Les N' fils externes F3' sont enroulés en hélice autour des M' fils intermédiaires F2' selon un pas p3' tel que 10 mm ≤ p3' ≤ 40 mm, de préférence 15 mm ≤ p3' ≤ 35 mm, plus préférentiellement 15 mm ≤ p3' ≤ 25 mm et encore plus préférentiellement 17 mm ≤ p3' ≤ 23 mm. Ici p3'=20 mm.

La couche intermédiaire C2' de chaque toron externe TE est désaturée et incomplètement insaturée. La distance interfils I2' de la couche intermédiaire C2' séparant en moyenne les M' fils intermédiaires est supérieure ou égale à 5 µm. La distance interfils I2' est de préférence supérieure ou égale à 10 µm, plus préférentiellement supérieure ou égale à 20 µm et encore plus préférentiellement à 30 µm. Dans ce mode de réalisation, la distance interfils I2' est de préférence supérieure ou égale à 35 µm et ici égale à 38 µm. La couche intermédiaire C2' étant incomplètement insaturée, la somme SI2' des distances interfils I2' de la couche intermédiaire C2' est inférieure au diamètre d2' des fils intermédiaire F2' de la couche intermédiaire C2'. Ici, la somme SI2'=6 x 0,038=0,23 mm, valeur strictement inférieure à d2'=0,30 mm.

En outre, la somme SI2' des distances interfils I2' de la couche intermédiaire C2' est inférieure au diamètre d3' des fils externes F3' de la couche externe C3' et de préférence inférieur ou égal à 0,8 x d3'. Ici, la somme SI2'=6 x 0,038=0,23 mm, valeur strictement inférieure à d3'=0,30 mm.

La couche externe C3' de chaque toron externe TE est désaturée et complètement insaturée. La distance interfils I3' de la couche externe C3' séparant en moyenne les N' fils externes est supérieure ou égale à 5 µm. La distance interfils I3' est de préférence supérieure ou égale à 10 µm, plus préférentiellement supérieure ou égale à 20 µm et encore plus préférentiellement à 30 µm. Dans ce mode de réalisation, la distance interfils I3' est de préférence supérieure ou égale à 35 µm et plus préférentiellement supérieure ou égale à 50 µm et ici égale à 55,4 µm. La somme SI3' des distances interfils I3' de la couche externe C3' est supérieure au diamètre d3' des fils externes F3' de la couche externe C3'. Ici, la somme SI3'=11 x 0,0554=0,61 mm, valeur strictement supérieure à d3'=0,30 mm.

Chaque fil interne, intermédiaire et externe de chaque toron externe TE présente respectivement un diamètre d1', d2' et d3'. Chaque diamètre des fils interne d1', intermédiaires d2' et externes d3' de chaque toron externe TE va de 0,15 mm à 0,60 mm, de préférence de 0,20 mm à 0,50 mm, plus préférentiellement de 0,25 mm à 0,45 mm et encore plus préférentiellement de 0,28 mm à 0,42 mm.

Le fil interne F1' de chaque toron externe TE présente un diamètre d1' supérieur ou égal au diamètre d2' de chaque fil intermédiaire F2 de chaque toron externe TE. Le fil interne F1' de chaque toron externe TE présente un diamètre d1' supérieur ou égal au diamètre d3' de chaque fil externe F3' de chaque toron externe TE. Chaque diamètre d2' de chaque fil intermédiaire F2' de chaque toron externe TE et chaque diamètre d3' de chaque fil externe F3' de chaque toron externe TE sont tels que d2'=d3'.

En l'espèce, d1'>d2' et d1'>d3' et d1'=0,38 mm, d2'=d3'=0,30 mm.

Le fil interne F1 du toron interne TI présente un diamètre d1 supérieur ou égal au diamètre d1' de chaque fil interne F1' de chaque toron externe TE, de préférence le fil interne F1 du toron interne TI présente un diamètre d1 égal au diamètre d1' de chaque fil interne F1' de chaque toron externe TE. Ici, d1=d1'=0,38 mm.

Le fil interne F1 du toron interne TI présente un diamètre d1 supérieur ou égal au diamètre d2' de chaque fil intermédiaire F2' de chaque toron externe TE, de préférence le fil interne F1 du toron interne TI présente un diamètre d1 supérieur au diamètre d2' de chaque fil intermédiaire F2' de chaque toron externe TE. Ici d1=0,38 mm > d2'=0,30 mm.

Le fil interne F1 du toron interne TI présente un diamètre d1 supérieur ou égal au diamètre d3' de chaque fil externe F3' de chaque toron externe TE, de préférence le fil interne F1 du toron interne TI présente un diamètre d1 supérieur au diamètre d3' de chaque fil externe F3' de chaque toron externe TE. Ici d1=0,38 mm > d3'=0,30 mm.

Chaque fil intermédiaire F2 du toron interne TI présente un diamètre d2 supérieur ou égal au diamètre d2' de chaque fil intermédiaire F2' de chaque toron externe TE. De préférence, ici, d2=0,35 mm > d2'=0,30 mm.

Chaque fil externe F3 du toron interne TI présente un diamètre d3 supérieur ou égal au diamètre d3' de chaque fil externe F3 de chaque toron externe TE. De préférence, ici d3=0,35 mm > d3'=0,30 mm.

Chaque fil présente une résistance à la rupture, notée Rm, telle que 2500 ≤ Rm ≤ 3100 MPa. On dit de l'acier de ces fils qu'il est de grade SHT (« Super High Tensile »). D'autres fils peuvent être utilisés, par exemple des fils de grade inférieur, par exemple de grade NT (« Normal Tensile ») ou HT (« High Tensile »), comme des fils de grade supérieur, par exemple de grade UT (« Ultra Tensile ») ou MT (« Mega Tensile »).

### PROCEDE DE FABRICATION DU CABLE SELON L'INVENTION

On fabrique le câble selon l'invention grâce à un procédé comprenant des étapes bien connues de l'homme du métier. Ainsi, on rappelle qu'il existe deux techniques possibles d'assemblage de fils ou de torons métalliques :
- soit par câblage: dans un tel cas, les fils ou torons ne subissent pas de torsion autour de leur propre axe, en raison d'une rotation synchrone avant et après le point d'assemblage ;
- soit par retordage: dans un tel cas, les fils ou torons subissent à la fois une torsion collective et une torsion individuelle autour de leur propre axe, ce qui génère un couple de détorsion sur chacun des fils ou torons.

Le toron interne précédemment décrit est fabriqué selon des procédés connus comportant les étapes suivantes, opérées préférentiellement en ligne et en continu :
- tout d'abord, une première étape d'assemblage par retordage ou câblage des M fils intermédiaires autour du Q=1 fil interne la couche interne C1 au pas p2 et dans le sens Z pour former la couche intermédiaire C2 en un premier point d'assemblage ;
- suivie d'une deuxième étape d'assemblage par retordage ou câblage des N fils externes autour des M fils intermédiaires de la couche intermédiaire C2 au pas p3 et dans le sens Z pour former la couche externe C3 en un deuxième point d'assemblage ;
- préférentiellement une étape d'équilibrage final des torsions.

Un procédé analogue est utilisé pour fabriquer, mutatis mutandis, chaque toron externe TE.

Par « équilibrage de torsion », on entend ici de manière bien connue de l'homme du métier l'annulation des couples de torsion résiduels (ou du retour élastique de de torsion) s'exerçant sur chaque fil du toron, dans la couche intermédiaire comme dans la couche externe.

Apres cette étape ultime d'équilibrage de la torsion, la fabrication du toron est terminée. Chaque toron est enroulé sur une ou plusieurs bobines de réception, pour stockage, avant l'opération ultérieure d'assemblage câblage des torons élémentaires pour l'obtention du câble multi-torons.

Pour la fabrication du câble multi-torons de l'invention, on procède de manière bien connue de l'homme du métier, par câblage ou retordage des torons précédemment obtenus, à l'aide de machines de câblage ou retordage dimensionnées pour assembler des torons.

Ainsi, on assemble les L torons externes TE autour du toron interne TI au pas p et dans le sens S pour former le câble 50. Eventuellement, dans une dernière étape d'assemblage, on enroule la frette F au pas pf dans le sens Z autour de l'assemblage précédemment obtenu.

Le câble est ensuite incorporé par calandrage à des tissus composites formés d'une composition connue à base de caoutchouc naturel et de noir de carbone à titre de charge renforçante, utilisée conventionnellement pour la fabrication des armatures de sommet de pneumatiques radiaux. Cette composition comporte essentiellement, en plus de l'élastomère et de la charge renforçante (noir de carbone), un antioxydant, de l'acide stéarique, une huile d'extension, du naphténate de cobalt en tant que promoteur d'adhésion, enfin un système de vulcanisation (soufre, accélérateur, ZnO).

Les tissus composites renforcés par ces câbles comportent une matrice de composition élastomérique formée de deux couches fines de composition élastomérique qui sont superposées de part et d'autre des câbles et qui présentent respectivement une épaisseur comprise entre 1 et 4 mm bornes incluses. Le pas de calandrage (pas de pose des câbles dans le tissu de composition élastomérique) va de 4 mm à 8 mm.

Ces tissus composites sont ensuite utilisés en tant que nappe de travail dans l'armature de sommet lors du procédé de fabrication du pneumatique, dont les étapes sont par ailleurs connues de l'homme du métier.

**CABLE SELON UN DEUXIEME MODE DE REALISATION DE L'INVENTION**

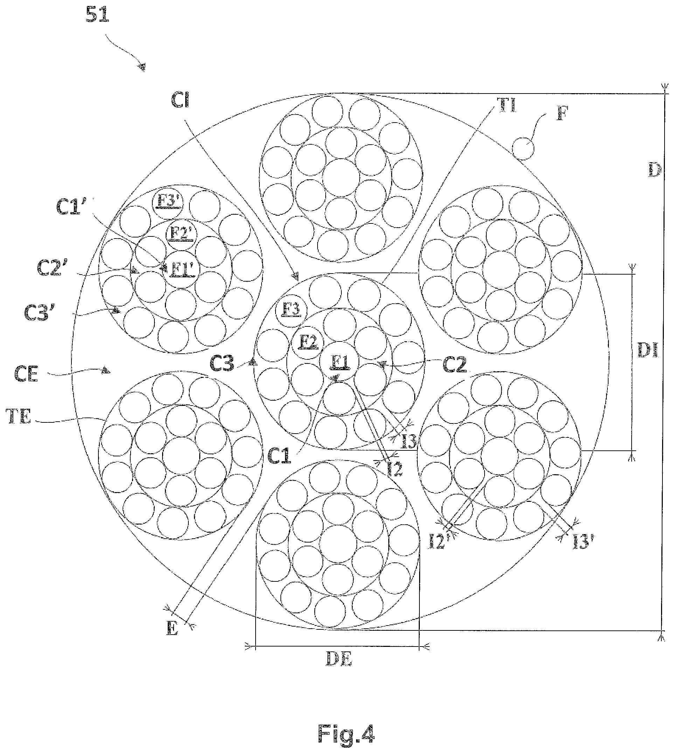

On a représenté sur la figure 4 un câble 51 selon un deuxième mode de réalisation de l'invention. Les éléments analogues au premier mode de réalisation sont désignés par des références identiques. Sauf mention contraire, seules les différences par rapport au premier mode de réalisation sont décrites.

### Toron interne TI du câble 51

Le toron interne du câble 51 selon le deuxième mode de réalisation est identique à celui du câble 50 selon le premier mode de réalisation.

Conformément à l'invention, les pas p2 et p3 vérifient 0,43 ≤ (p3-p2)/p3 ≤ 0,57.

### Torons externes TE du câble 51

A la différence du premier mode de réalisation, le pas p2' est tel que 8 mm ≤ p2' ≤ 16 mm, de préférence 8 mm ≤ p2' ≤ 14 mm et plus préférentiellement 8 mm ≤ p2' ≤ 12 mm. Ici p2'=10 mm.

De plus, les pas p2' et p3' vérifient 0,36 ≤ (p3'-p2')/p3 ≤ 0,57. Avantageusement, les pas p2' et p3' vérifient 0,38 ≤ (p3'-p2')/p3', de préférence 0,40 ≤ (p3'-p2')/p3', plus préférentiellement 0,43 ≤ (p3'-p2')/p3' et encore plus préférentiellement 0,45 ≤ (p3'-p2')/p3'. Avantageusement, les pas p2' et p3' vérifient (p3'-p2')/p3' ≤ 0,55 et de préférence (p3'-p2')/p3' ≤ 0,53. Ici, (p3'-p2')/p3'=0,50.

La distance interfils I2' est ici égale à 35,4 µm et SI2'=6 x 0,0354=0,21 mm, valeur également strictement inférieure à d3'=0,30 mm.

### CABLE SELON DES TROISIEME ET QUATRIEME MODES DE REALISATION DE L'INVENTION

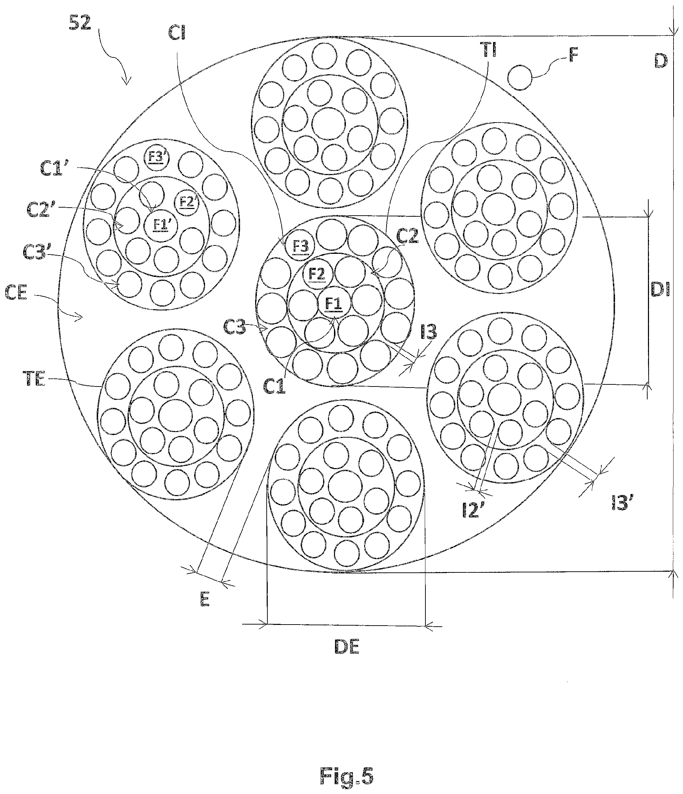

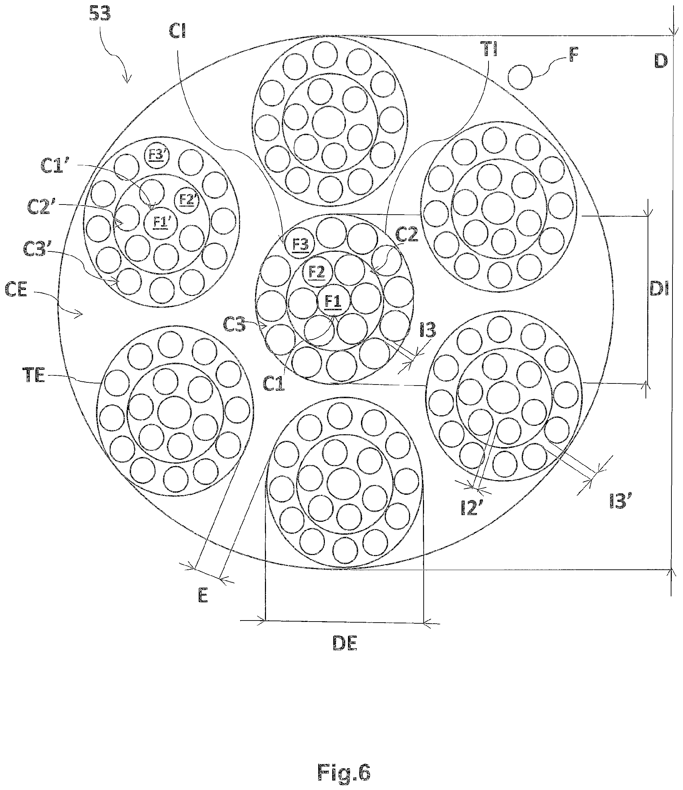

On a représenté sur les figures 5 et 6 des câbles 52 et 53 selon respectivement des troisième et quatrième modes de réalisation de l'invention. Les éléments analogues au premier mode de réalisation sont désignés par des références identiques. Les caractéristiques de ces câbles sont rassemblées dans le tableau C.

### CABLE SELON DES CINQUIEME, SIXIEME ET SEPTIEME MODES DE REALISATION DE L'INVENTION

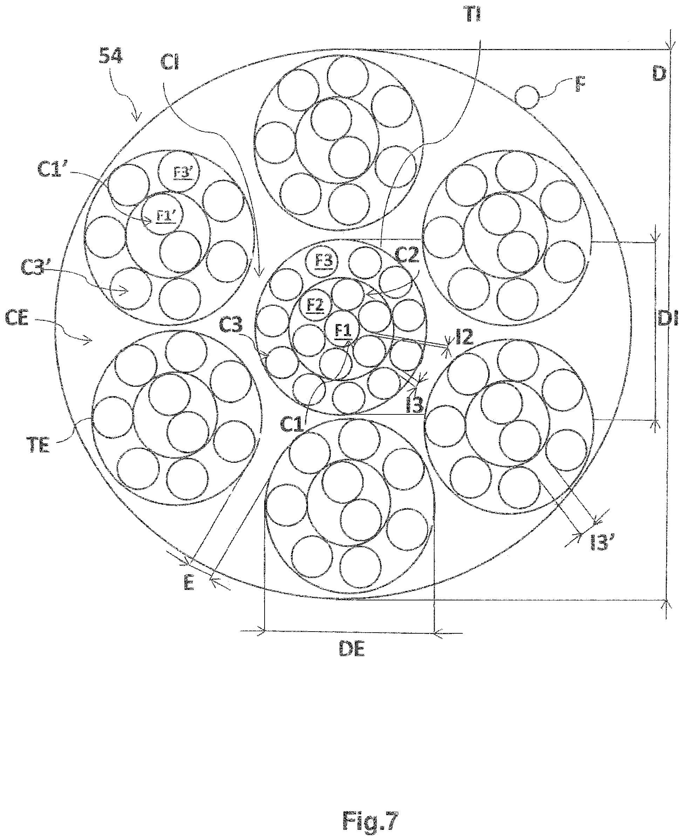

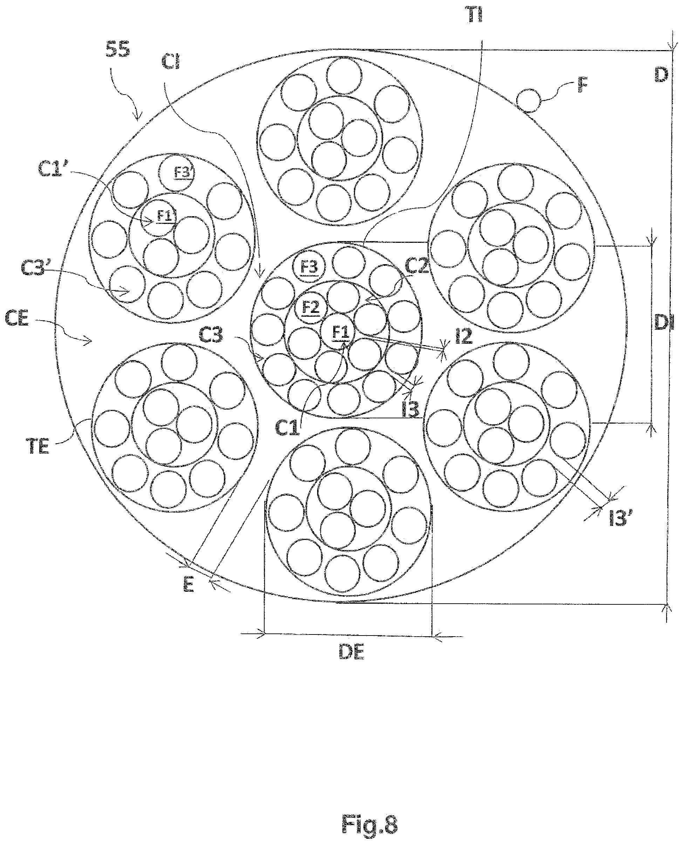

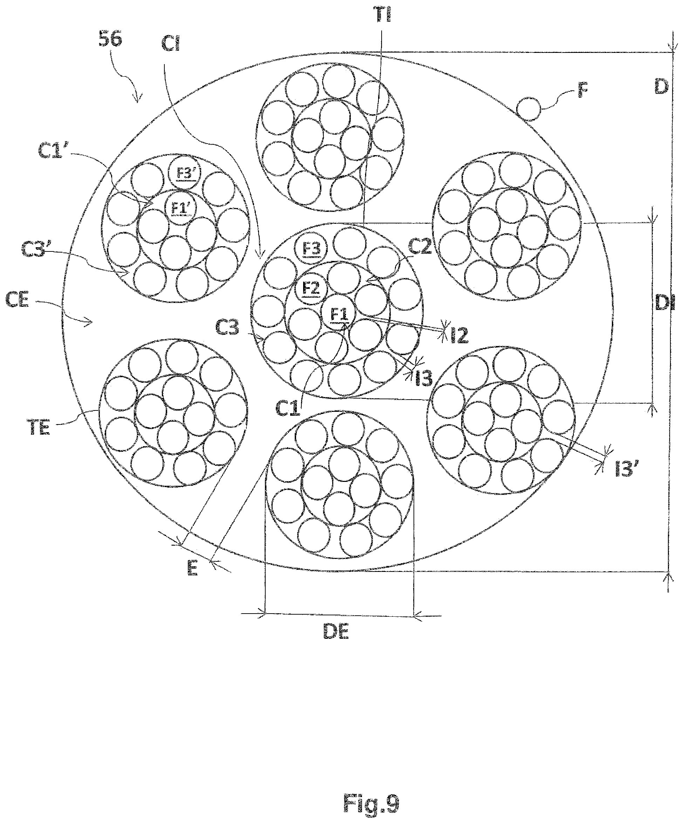

On a représenté sur les figures 7, 8 et 9 des câbles 54, 55 et 56 selon respectivement des cinquième, sixième et septième modes de réalisation de l'invention. Les éléments analogues au premier mode de réalisation sont désignés par des références identiques.

### Toron interne TI des câbles 54, 55 et 56

Chaque toron interne de chaque câble 54, 55 et 56 est identique à celui du câble 50 selon le premier mode de réalisation.

Conformément à l'invention, les pas p2 et p3 vérifient, pour chaque câble 54, 55 et 56, la relation suivante : 0,43 ≤ (p3-p2)/p3 ≤ 0,57.

### Torons externes TE du câble 54

A la différence du premier mode de réalisation du câble 50 décrit précédemment, chaque toron externe TE du câble 54 est à deux couches. Chaque toron externe TE comprend, ici est constitué, de deux couches, pas plus, pas moins.

Chaque toron externe TE comprend une couche interne C1' constituée de Q' fil(s) interne(s) F1' et une couche externe C3' constituée de N' fils externes F3' enroulés en hélice autour et au contact de la couche interne C1'.

Q'>1, de préférence Q'=2, 3 ou 4 et ici Q'=2. Avec Q'=2, N'=7 ou 8 et de préférence Q'=2 et N'=7.

Les fils internes F1' sont enroulés en hélice selon un pas p1=7,7 mm.

La couche interne C1' de chaque toron externe TE est enroulée en hélice selon un sens d'enroulement Z opposé au sens d'enroulement du câble S.

La couche externe C3' de chaque toron externe TE est enroulée autour de la couche interne C1' de chaque toron externe TE selon un sens d'enroulement Z opposé au sens d'enroulement du câble S et dans le même sens Z que la couche interne C1' de chaque toron externe TE. Les N' fils externes F3' sont enroulés en hélice autour des fils internes F1' selon un pas p3' tel que 10 mm ≤ p3' ≤ 40 mm, de préférence 15 mm ≤ p3' ≤ 35 mm et plus préférentiellement 15 mm ≤ p3' ≤ 25 mm. Ici p3'=15,4 mm.

### Torons externes TE du câble 55

A la différence du cinquième mode de réalisation du câble 54 décrit précédemment, chaque toron externe TE est tel que Q'=3. Avec Q'=3, N'=7, 8 ou 9 et de préférence Q'=3 et N'=8.

### Torons externes TE du câble 56

A la différence du cinquième mode de réalisation du câble 54 décrit précédemment, chaque toron externe TE est tel que Q'=4. Avec Q'=4, N'=7, 8, 9 ou 10 et de préférence Q'=4 et N'=9.

Pour chaque câble 54, 55 et 56 décrit ci-dessus, les autres caractéristiques de chaque toron externe TE, notamment les caractéristiques relatives à I3', SI3' et les relations entre les diamètres d1, d2, d3, d1', d3' ainsi que les caractéristiques relatives à DI, DE, DI/DE, D et E sont rassemblées et déductibles directement du tableau C.

### CABLE SELON UN HUITIEME MODE DE REALISATION DE L'INVENTION

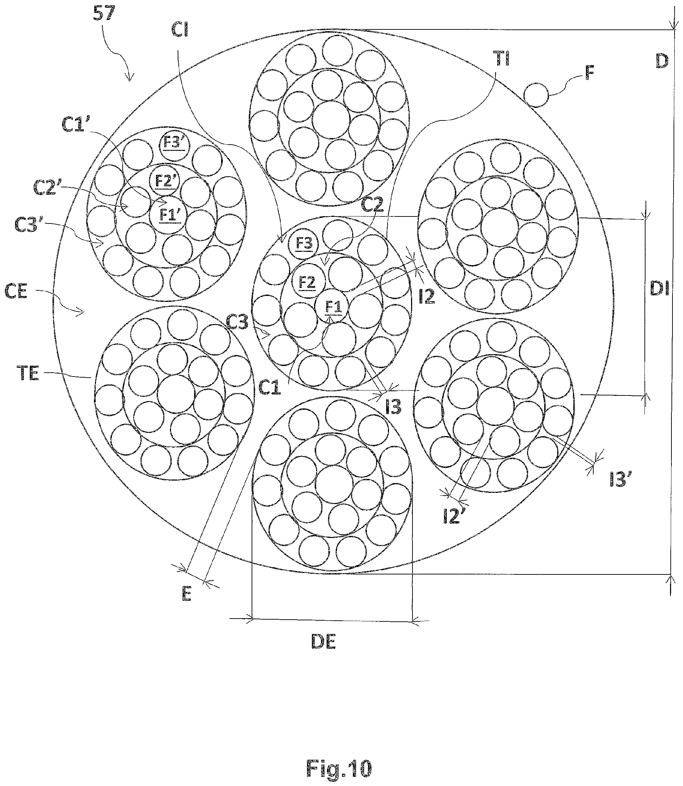

On a représenté sur la figure 10 un câble 57 selon un huitième mode de réalisation de l'invention. Les éléments analogues au premier mode de réalisation sont désignés par des références identiques. Sauf mention contraire, seules les différences par rapport au premier mode de réalisation sont décrites. Le câble 57 selon le huitième mode de réalisation diffère du câble 50 selon le premier mode de réalisation de par son toron interne TI.

### Toron interne TI du câble 57

A la différence du toron interne du câble 50 selon le premier mode de réalisation, Q=1, M=5, N=11.

La distance interfils I2 est égale à 57,5 µm.

La somme SI2 des distances interfils I2 de la couche intermédiaire C2 est inférieure au diamètre d3 des fils externes F3 de la couche externe C3 et de préférence inférieur ou égal à 0,8 x d3. Ici, la somme SI2=5 x 0,0575=0,29 mm, valeur strictement inférieure à d3=0,30 mm.

La distance interfils I3 est égale à 74,7 µm. La somme SI3 des distances interfils I3 de la couche externe C3 est supérieure au diamètre d3 des fils externes F3 de la couche externe C3. Ici, la somme SI3=11 x 0,0747=0,82 mm, valeur strictement supérieure à d3=0,30 mm.

En l'espèce, d1=d2 et d1>d3 et d1=d2=0,35 mm, d3=0,30 mm.

Conformément à l'invention, les pas p2 et p3 vérifient la relation suivante : 0,43 ≤ (p3-p2)/p3 ≤ 0,57.

Les autres caractéristiques du câble 57, notamment les caractéristiques relatives à DI, DE, DI/DE, D et E sont rassemblées et déductibles directement du tableau D.

### CABLE SELON UN NEUVIEME MODE DE REALISATION DE L'INVENTION

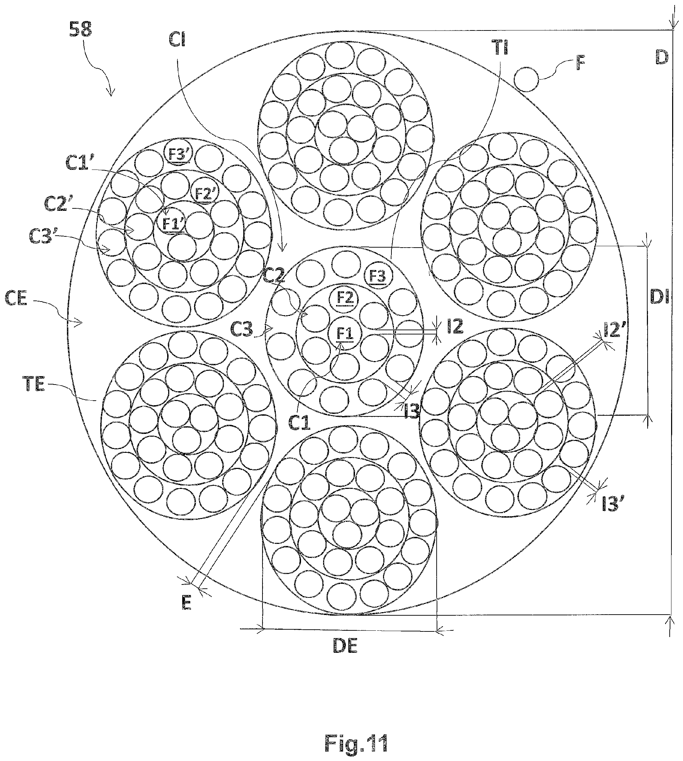

On a représenté sur la figure 11 un câble 58 selon un neuvième mode de réalisation de l'invention. Les éléments analogues au premier mode de réalisation sont désignés par des références identiques. Sauf mention contraire, seules les différences par rapport au premier mode de réalisation sont décrites.

A la différence du premier mode de réalisation du câble 50 décrit précédemment, le câble 58 selon le neuvième mode de réalisation est tel que D=5,7 mm.

Le diamètre DI du toron interne TI et le diamètre DE de chaque toron externe TE sont tels que Dl=1,97 mm, DE=1,85 mm et DI/DE=1,06.

La distance E inter-torons moyenne séparant deux torons externes TE adjacents est ici E=41 µm.

### Toron interne TI du câble 58

A la différence du premier mode de réalisation du câble 50 décrit précédemment, le toron interne TI du câble 56 selon le neuvième mode de réalisation est tel que d1>d2=d3 et ici d1=0,45 mm, d2=d3=0,38 mm.

Conformément à l'invention, les pas p2 et p3 vérifient la relation suivante : 0,43 ≤ (p3-p2)/p3 ≤ 0,57.

La distance interfils I2 de la couche intermédiaire C2 séparant en moyenne les M fils intermédiaires est ici égale à 25,7 µm.

La somme SI2 des distances interfils I2 de la couche intermédiaire C2 est inférieure au diamètre d3 des fils externes F3 de la couche externe C3 et de préférence inférieur ou égal à 0,8 x d3. Ici, la somme SI2=6 x 0,0257=0,16 mm, valeur strictement inférieure à d3=0,38 mm.

La distance interfils I3 de la couche externe C3 séparant en moyenne les N fils externes est ici égale à 57,5 µm. La somme SI3 des distances interfils I3 de la couche externe C3 est supérieure au diamètre d3 des fils externes F3 de la couche externe C3. Ici, la somme SI3=11 x 0,0575=0,63 mm, valeur strictement supérieure à d3=0,38 mm.

### Torons externes TE du câble 50

A la différence des torons externes du câble 50 selon le premier mode de réalisation, chaque toron externe TE est tel que Q'=3.

On a Q'=3, M'=8 ou 9 et N'=13, 14 ou 15, de préférence Q'=3, M'=8 ou 9, N'=14 ou 15, plus préférentiellement Q'=3, M'=9, N'=14 ou 15 et ici, encore plus préférentiellement Q'=3, M'=9 et N'=15.

La couche interne C1' de chaque toron externe TE est enroulée selon un sens d'enroulement Z opposé au sens d'enroulement S du câble. En variante, ce sens pourrait être identique au sens au sens d'enroulement S du câble. Les Q' fils internes F1' sont enroulés en hélice selon un pas p1' tel que 5 mm ≤ p1' ≤ 10 mm. Ici p1'=6,5 mm.

A la différence du premier mode de réalisation, les M' fils intermédiaires F2' sont enroulés en hélice autour des fils internes F1' selon un pas p2'=12 mm et les N' fils externes F3' sont enroulés en hélice autour des fils intermédiaires F2' selon un pas p3'=18 mm.

La distance interfils I2' de la couche intermédiaire C2' séparant en moyenne les M' fils intermédiaires est ici égale à 16,5 µm.

La somme SI2' des distances interfils I2' de la couche intermédiaire C2' est inférieure au diamètre d3' des fils externes F3' de la couche externe C3' et de préférence inférieur ou égal à 0,8 x d3'. Ici, la somme SI2'=9 x 0,0165=0,15 mm, valeur strictement inférieure à d3'=0,30 mm.

La distance interfils I3' de la couche externe C3' séparant en moyenne les N' fils externes est ici égale à 11,5 µm. La somme SI3' des distances interfils I3' de la couche externe C3' est supérieure au diamètre d3' des fils externes F3' de la couche externe C3'. Ici, la somme SI3'=15 x 0,0115=0,17 mm, valeur strictement supérieure à d3'=0,30 mm.

En outre, d1'=d2'=d3'=0,30 mm. De plus, d1=0,45mm > d1'=0,30 mm.

### CABLE SELON UN DIXIEME MODE DE REALISATION DE L'INVENTION

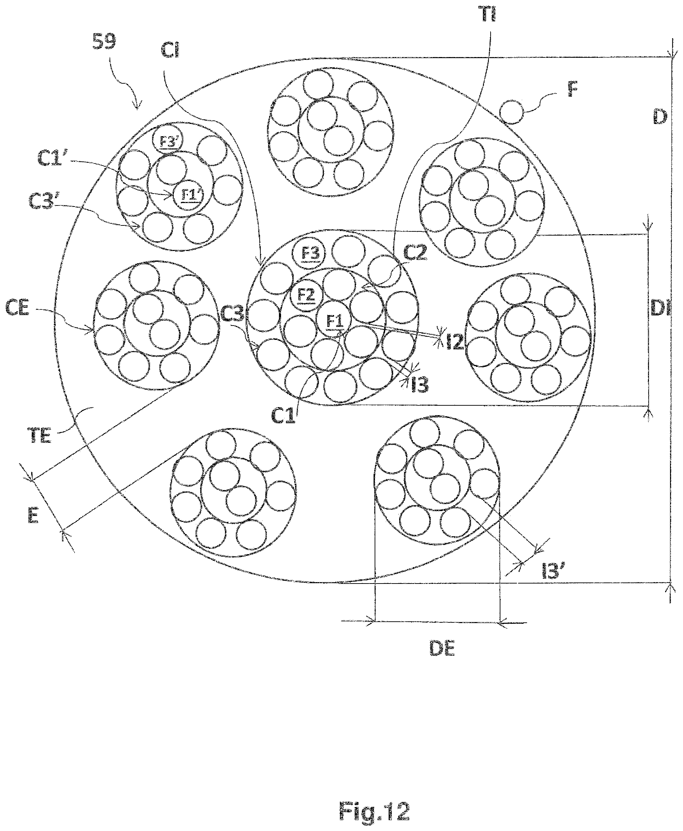

On a représenté sur la figure 12 un câble 59 selon un dixième mode de réalisation de l'invention. Les éléments analogues au cinquième mode de réalisation sont désignés par des références identiques. Sauf mention contraire, seules les différences par rapport au cinquième mode de réalisation sont décrites. Le câble 59 selon le dixième mode de réalisation diffère du câble 54 selon le cinquième mode de réalisation de par ses torons externes TE et le nombre L de torons externes TE.

A la différence du cinquième mode de réalisation du câble 54 décrit précédemment, le câble 59 selon le dixième mode de réalisation est tel que la couche externe CE est constituée de L=7 torons externes TE. L'assemblage constitué par les couches interne CI et externe CE, c'est-à-dire le câble 59 sans la frette F, présente un diamètre D= 4,3 mm.

Le diamètre DI du toron interne TI et le diamètre DE de chaque toron externe TE sont tels que le rapport DI/DE≥1,30, de préférence DI/DE≥1,35 et plus préférentiellement DI/DE≥1,40. Ce rapport DI/DE est également tel que DI/DE≤1,70, de préférence DI/DE≤1,65 et plus préférentiellement DI/DE≤1,60. En l'espèce, Dl=1,78 mm, DE=1,28 mm et DI/DE=1,39.

La distance E inter-torons moyenne séparant deux torons externes TE adjacents est ici E=38 µm.

### Torons externes TE du câble 59

A la différence de chaque toron externe TE du câble 54 selon le cinquième mode de réalisation, chaque toron externe TE du câble 59 selon le dixième mode de réalisation est tel que d1'=d3'=0,32 mm.

La distance interfils I3' de la couche externe C3' séparant en moyenne les N' fils externes est ici égale à 93,3 µm. La somme SI3' des distances interfils I3' de la couche externe C3' est supérieure au diamètre d3' des fils externes F3' de la couche externe C3'. Ici, la somme SI3'=7 x 0,0933=0,65 mm, valeur strictement supérieure à d3'=0,32 mm.

De plus, on a d1=0,38 mm > d1'=d3'=0,32 mm et d3=0,35 mm > d3'=0,32 mm.

On a résumé dans les tableaux C et D ci-dessous les caractéristiques des différents câbles décrits ci-dessus.

**Tableau C**

| Câble | | 50 | 51 | 52 | 53 | 54 | 55 | 56 |
|---|---|---|---|---|---|---|---|---|
| TI | Q/M/N | 1/6/11 | 1/6/11 | 1/6/12 | 1/6/12 | 1/6/11 | 1/6/11 | 1/6/11 |
| | d1/d2/d3 | 0,38/0,35/0,35 | 0,38/0,35/0,35 | 0,38/0,35/0,35 | 0,38/0,35/0,35 | 0,38/0,35/0,35 | 0,38/0,35/0,35 | 0,38/0,35/0,35 |
| | sens C1/pas p1 (mm) | -/Inf | -/Inf | -/Inf | -/Inf | -/Inf | -/Inf | -/Inf |
| | sens C2/pas p2 (mm) | Z/10 | Z/10 | Z/10 | Z/10 | Z/10 | Z/10 | Z/10 |
| | sens C-3/pas p3 (mm) | Z/20 | Z/20 | Z/20 | Z/20 | Z/20 | Z/20 | Z/20 |
| | (p3-p2)/p3 | 0,50 | 0,50 | 0,50 | 0,50 | 0,50 | 0,50 | 0,50 |
| | I2 (µm)/SI2 (mm) | 8,2/0,05 | 8,2/0,05 | 8,2/0,05 | 8,2/0,05 | 8,2/0,05 | 8,2/0,05 | 8,2/0,05 |
| | I3 (µm)/SI3 (mm) | 45,0/0,50 | 45,0/0,50 | 12/0,14 | 12/0,14 | 45,0/0,50 | 45,0/0,50 | 45,0/0,50 |
| | DI (mm) | 1,78 | 1,78 | 1,78 | 1,78 | 1,78 | 1,78 | 1,78 |
| TE | Q'/M'/N' | 1/6/11 | 1/6/11 | 1/6/12 | 1/6/12 | 21-17 | 3/-/8 | 4/-/9 |
| | d1'/d2'/d3' | 0,38/0,30/0,30 | 0,38/0,30/0,30 | 0,38/0,30/0,30 | 0,38/0,30/0,30 | 0,40/-/0,40 | 0,38/-/0,38 | 0,35/-/0,35 |
| | sens C1'/pas p1' (mm) | inf | inf | inf | inf | Z/7,7 | Z/7,7 | Z/7,7 |
| | sens C2'/pas p2' (mm) | Z/14 | Z/10 | Z/14 | Z/10 | - | - | - |
| | sens C3'/pas p3' ( mm) | Z/20 | Z/20 | Z/20 | Z/20 | Z/15,4 | Z/15,4 | Z/15,4 |
| | (p3'-p2'/p3' | 0,50 | 0,30 | 0,50 | 0,30 | - | - | - |
| | I2' (µm)/SI2' (mm) | 38/0,23 | 35,4/0,21 | 38/0,23 | 35,4/0,21 | - | - | - |
| | I3' (µm)/SI3' (mm) | 55,4/0,61 | 55,4/0,61 | 25,7/0,31 | 25,7/0,31 | 113/0,79 | 70,5/0,56 | 51,7/0,47 |
| | DE (mm) | 1,58 | 1,58 | 1,58 | 1,58 | 1,6 | 1,58 | 1,55 |
| L | | 6 | 6 | 6 | 6 | 6 | 6 | 6 |
| D (mm) | | 4,9 | 4,9 | 4,9 | 4,9 | 5,0 | 4,9 | 4,9 |
| E (µm) | | 87,3 | 87,3 | 87,3 | 87,3 | 76,8 | 87 | 103 |
| DI/DE | | 1,13 | 1,13 | 1,13 | 1,13 | 1,11 | 1,13 | 1,15 |
| Sens d'enroulment du câble | | S | S | S | S | S | S | S |

**Tableau D**

| Câble | | 57 | 58 | 59 |
|---|---|---|---|---|
| TI | Q/M/N | 1/5/11 | 1/6/11 | 1/6/11 |
| | d1/d2/d3 | 0,35/0,35/0,30 | 0,45/0,38/0,38 | 0,38/0,35/0,35 |
| | sens C1/pas p1 (mm) | inf | Inf | -/Inf |
| | sens C2/pas p2 (mm) | Z/10 | Z/10 | Z/10 |
| | sens C3/pas p3 (mm) | Z/20 | Z/20 | Z/20 |
| | (p3-p2)/p3 | 0,50 | 0,50 | 0,50 |
| | I2 (µm)/SI2 (mm) | 57,5/0,29 | 25,7/0,16 | 8,2/0,05 |
| | I3 (µm)/SI3 (mm) | 74,7/0,82 | 57,5/0,63 | 45,0/0,50 |
| | DI (mm) | 1,65 | 1,97 | 1,78 |
| TE | Q'/M'/N' | 1/6/11 | 3/9/15 | 21-17 |
| | d1'/d2'/d3' | 0,38/0,30/0,30 | 0,30/0,30/0,30 | 0,32/-/0,32 |
| | sens C1'/pas p1' (mm) | inf | Z/6,5 | Z/7,7 |
| | sens C2'/pas p2' (mm) | Z/14 | Z/12 | - |
| | sens C3'/pas p3' (mm) | Z/20 | Z/18 | Z/15,4 |
| | (p3'-p2')/p3' | 0,30 | 0,30 | - |
| | I2' µm/SI2' (mm) | 38/0,23 | 16,5/0,15 | - |
| | I3' (µm)/SI3' (mm) | 55,4/0,61 | 11,5/0,17 | 93,3/0,65 |
| | DE (mm) | 1,58 | 1,85 | 1,28 |
| L | | 6 | 6 | 7 |
| D (mm) | | 4,8 | 5,7 | 4,3 |
| E (µm) | | 22,6 | 41 | 38 |
| D /DE | | 1,04 | 1,06 | 1,39 |
| Sens d'enroulemen du câble | | S | S | S |

### MESURES ET TESTS COMPARATIFS

### Test de perméabilité des câbles

Un tel test de perméabilité est bien connu de l'homme du métier et permet de déterminer la perméabilité longitudinale à l'air des câbles testés, par mesure du volume d'air traversant une éprouvette sous pression constante pendant un temps donné. Le principe d'un tel test, bien connu de l'homme du métier, est de démontrer l'efficacité du traitement d'un câble pour le rendre imperméable à l'air ; il a été décrit par exemple dans la norme ASTM D2692-98.

Un tel test est réalisé sur des câbles issus de fabrication et non vieillis. Les câbles bruts sont préalablement enrobés de l'extérieur par une composition élastomérique dite d'enrobage. Pour cela, une série de 10 câbles disposés parallèlement (distance inter-câble : 20 mm) est placée entre deux couches ou "skims" (deux rectangles de 80 x 200 mm) d'une composition de composition élastomérique diénique à l'état cru, chaque skim ayant une épaisseur de 5 mm ; le tout est alors bloqué dans un moule, chacun des câbles étant maintenu sous une tension suffisante (par exemple 3 daN) pour garantir sa rectitude lors de la mise en place dans le moule, à l'aide de modules de serrage ; puis on procède à la vulcanisation (cuisson) pendant environ 10 à 12 heures à une température d'environ 120°C et sous une pression de 15 bar (piston rectangulaire de 80 x 200 mm). Après quoi, on démoule l'ensemble et on découpe 10 éprouvettes de câbles ainsi enrobés, sous forme de parallélépipèdes de dimensions 7x7x60 mm, pour caractérisation.

On utilise comme composition élastomérique d'enrobage une composition d'élastomère(s) diénique(s) conventionnelle pour pneumatique, à base de caoutchouc naturel (peptisé) et de noir de carbone N330 (65 pce), comportant en outre les additifs usuels suivants: soufre (7 pce), accélérateur sulfénamide (1 pce), ZnO (8 pce), acide stéarique (0,7 pce), antioxydant (1,5 pce), naphténate de cobalt (1,5 pce) (pce signifiant parties en poids pour cent parties d'élastomère) ; le module E10 de la composition élastomérique d'enrobage est de 10 MPa environ.

Le test est réalisé sur 6 cm de longueur de câble, enrobé donc par sa composition élastomérique (ou composition élastomérique d'enrobage) environnante à l'état cuit, de la manière suivante : on envoie de l'air à l'entrée du câble, sous une pression de 1 bar, et on mesure le volume d'air à la sortie, à l'aide d'un débitmètre (calibré par exemple de 0 à 500 cm3/min). Pendant la mesure, l'échantillon de câble est bloqué dans un joint étanche comprimé (par exemple un joint en mousse dense ou en caoutchouc) de telle manière que seule la quantité d'air traversant le câble d'une extrémité à l'autre, selon son axe longitudinal, est prise en compte par la mesure ; l'étanchéité du joint étanche lui-même est contrôlée préalablement à l'aide d'une éprouvette de composition élastomérique pleine, c'est-à-dire sans câble.

Le débit d'air moyen mesuré (moyenne sur les 10 éprouvettes) est d'autant plus faible que l'imperméabilité longitudinale du câble est élevée. La mesure étant faite avec une précision de ± 0,2 cm3/min, les valeurs mesurées inférieures ou égales à 0,2 cm3/min sont considérées comme nulles ; elles correspondent à un câble qui peut être qualifié d'étanche (totalement étanche) à l'air selon son axe (i.e., dans sa direction longitudinale).

### Indicateur de pénétrabilité des torons par une composition élastomérique

Dans les tests qui suivent, on a déterminé la capacité d'un toron à être pénétrable par une composition élastomérique en simulant la taille des fenêtres de passage radial formées par deux fils adjacents F2 de la couche intermédiaire C2 et par deux fils adjacents F3 de la couche externe C3. De telles fenêtres sont illustrées sur la figure 13 sur laquelle on a représenté une vue schématique du toron interne selon son axe principal P et sur la figure 14 qui représente la fenêtre de passage radial S définie précédemment.

Un tel indicateur de pénétrabilité du toron est une image de l'imperméabilité du toron à l'air. En effet, plus la taille des fenêtres est grande, plus l'indicateur de pénétrabilité est élevé, plus la composition d'élastomère est susceptible de pénétrer dans le toron et plus le toron est imperméable à l'air. La perméabilité pourrait être également déterminée par le test de perméabilité décrit ci-dessus appliqué au toron. Néanmoins à des fins de rapidité pour l'évaluation des torons, les inventeurs ont privilégié la simulation et le calcul des fenêtres S par rapport au test de perméabilité.

### Influence des sens d'enroulement

On a testé rassemblé dans le tableau 1 ci-dessous les résultats au test de perméabilité et au test de l'indicateur de pénétrabilité pour deux câbles témoins T1 et T2.

Les résultats à ces tests sont donnés en base 100. Ainsi, un résultat supérieur à 100 à l'un ou l'autre de ces tests signifie que le câble ou le toron testé présente une imperméabilité ou une pénétrabilité supérieure au câble ou toron témoin, ici le câble T1 ou les torons du câble T1.

La comparaison des câbles témoins T1, T2 montre que le fait que les couches externes C3 et C3' sont enroulés dans le même sens qui est opposé au sens d'enroulement des L torons externes TE (câble T1) est une caractéristique essentielle de l'invention permettant d'assurer une bonne imperméabilité du câble.

**Tableau 1**

| Câble | | T1 | T2 |
|---|---|---|---|
| TI | Q/M/N | 1/6/11 | 1/6/11 |
| | d1/d2/d3 | 0,38/0,35/0,35 | 0,38/0,35/0,35 |
| | sens C1/pas p1 (mm) | -/Inf | -/Inf |
| | sens C2/pas p2 (mm) | Z/14 | S/14 |
| | sens C3/pas p3 (mm) | Z/20 | S/20 |
| TE | Q'/M'/N' | 1/6/11 | 1/6/11 |
| | d1'/d2'/d3' | 0,38/0,30/0,30 | 0,38/0,30/0,30 |
| | sens C1'/pas p1' (mm) | inf | inf |
| | sens C2'/pas p2' (mm) | Z/14 | Z/14 |
| | sens C3'/pas p3' (mm) | Z/20 | Z/20 |
| | (p3'-p2')/p3' | 0,30 | 0,30 |
| Sens d'enroulement du câble | | S | S |
| Indicateur de pénétrabilité du toron externe (base 100 T1) | | 100 | 100 |
| Imperméabilité (base 100 T1) | | 100 | <10 |

### Evaluation de l'indicateur de pénétrabilité du toron interne en fonction du pas p3 du câble 50

On a simulé différents torons internes analogues au toron interne du câble 50 selon l'invention en faisant varier la valeur de p2 pour différentes valeurs de p3, toutes les autres caractéristiques structurales du câble restant inchangées par rapport à la description précédente.

On a rassemblé dans les différents tableaux 2 à 4 les résultats de ces simulations en base 100 par rapport à chaque fois à un toron témoin tel que (p3-p2)/p3=0,30. Ainsi pour une valeur de taille des fenêtres St pour le toron testé et une valeur de taille de fenêtre S0 pour le toron témoin, l'indicateur de pénétrabilité est égal à St*100/S0. Ainsi, un résultat supérieur à 100 signifie que le toron testé présente une pénétrabilité supérieure au toron témoin correspondant. On estime que la taille des fenêtres est significativement plus élevée lorsque l'indicateur de pénétrabilité est supérieur ou égal à 120, c'est-à-dire que la taille des fenêtres du toron testé est 20% supérieure à celle du toron témoin.

Chaque tableau 2 à 4 correspond respectivement à un pas p3 égal à 20, 23, 25 mm.

On note que, bien que la distance interfils I2 augmente lorsque p2 augmente, la valeur maximale des fenêtres de passage radial est obtenue pour des valeurs de I2 non nécessairement les plus élevées. Ainsi, avant la réalisation de l'invention, l'homme du métier, partant de l'hypothèse que plus I2 était petit, moins le toron était pénétrable, pouvait difficilement prévoir une pénétrabilité maximale pour des valeurs de p2 donnant des valeurs de I2 relativement faibles.

Dans l'intervalle du rapport (p3-p2)/p3 allant de 0,43 à 0,57, et pour chaque valeur de p3 testée, la valeur de l'indicateur de pénétrabilité est significativement supérieure à celle obtenue pour le toron témoin correspondant. Exemples qui ne sont pas conformes à l'invention revendiquée:
Tableau 2: col. 1-5, 13;
Tableau 3: col. 1-4, 10-12;
Tableau 4: col. 1-3, 10-12;

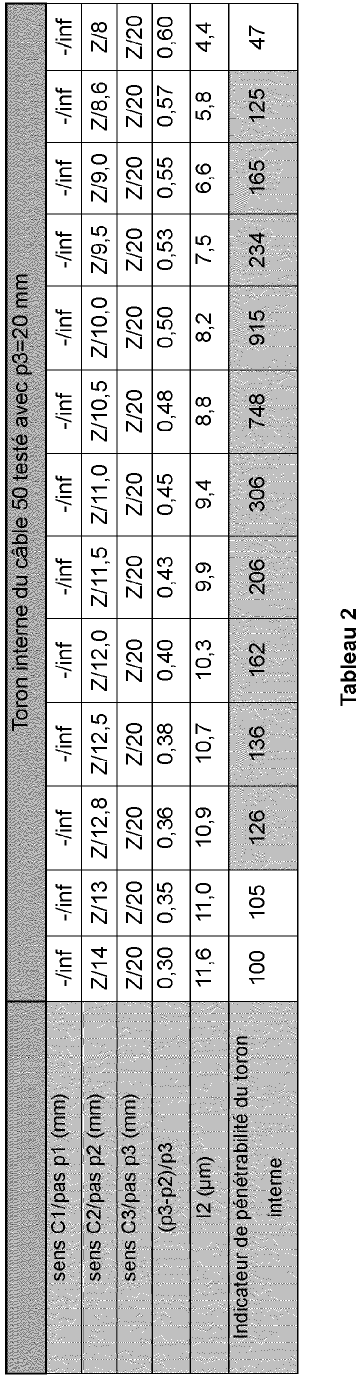

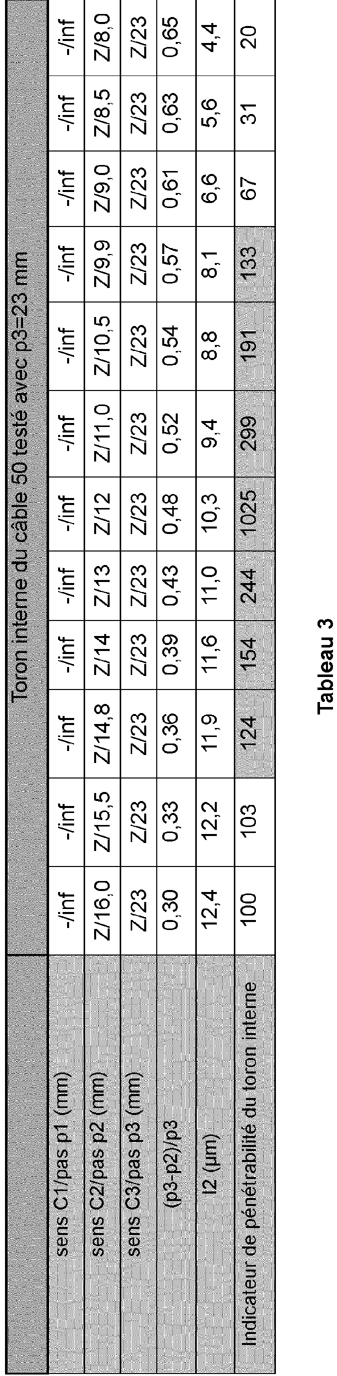

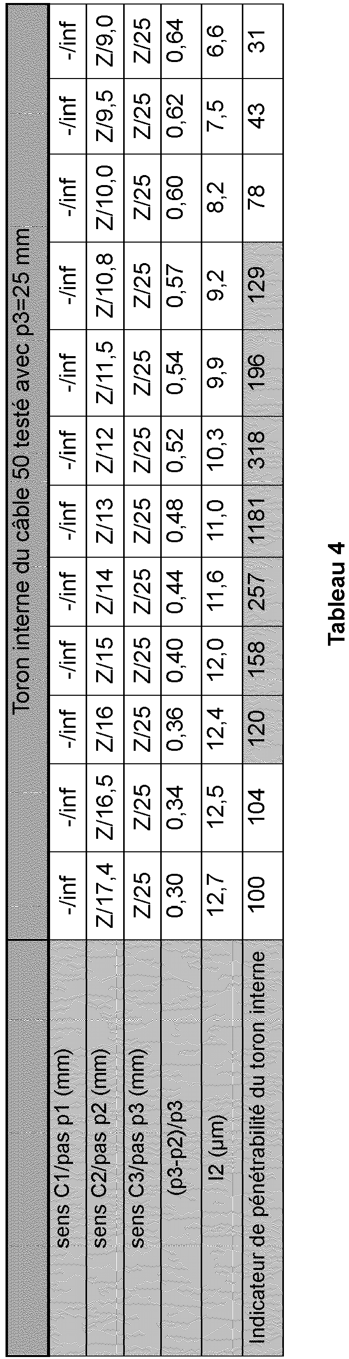

### Evaluation de l'indicateur de pénétrabilité du toron interne des câbles 51 à 59

D'une façon analogue au câble 50 selon le premier mode de réalisation de l'invention, on a simulé différents torons externes des câbles 51 à 59 selon les différents modes de réalisation de l'invention en faisant varier la valeur de p2 en fixant la valeur de p3 à celle décrite ci-dessus, toutes les autres caractéristiques structurales de chaque câble restant inchangées par rapport à la description précédente.

On a rassemblé dans les différents tableaux 5 à 8 les résultats de ces simulations en base 100 par rapport à chaque fois à un toron témoin tel que (p3-p2)/p3=0,30. Ainsi pour une valeur de taille des fenêtres St pour le toron testé et une valeur de taille de fenêtre S0 pour le toron témoin, l'indicateur de pénétrabilité est égal à St*100/S0. Ainsi, un résultat supérieur à 100 signifie que le toron testé présente une pénétrabilité supérieure au toron témoin correspondant. On estime que la taille des fenêtres est significativement plus élevée lorsque l'indicateur de pénétrabilité est supérieur ou égal à 120, c'est-à-dire que la taille des fenêtres du toron testé est 20% supérieure à celle du toron témoin.

On note que, bien que la distance interfils I2 augmente lorsque p2 augmente, la valeur maximale de la taille des fenêtres de passage radial est obtenue pour des valeurs de I2 non nécessairement les plus élevées. Ainsi, avant la réalisation de l'invention, l'homme du métier, partant de l'hypothèse que plus I2 était petit, moins le toron était pénétrable, pouvait difficilement prévoir une pénétrabilité maximale pour des valeurs de p2 donnant des valeurs de I2 relativement faibles.

Dans l'intervalle du rapport (p3-p2)/p3 allant de 0,43 à 0,57, et pour chaque valeur de p3 testée, la valeur de l'indicateur de pénétrabilité est significativement supérieure à celle obtenue pour le toron témoin correspondant.

Exemples qui ne sont pas conformes à l'invention revendiquée:
Tableau 5: col. 1-4, 12;
Tableau 6: col. 1-4, 12;
Tableau 7: col. 1-4, 12;
Tableau 8: col. 1-4, 12,

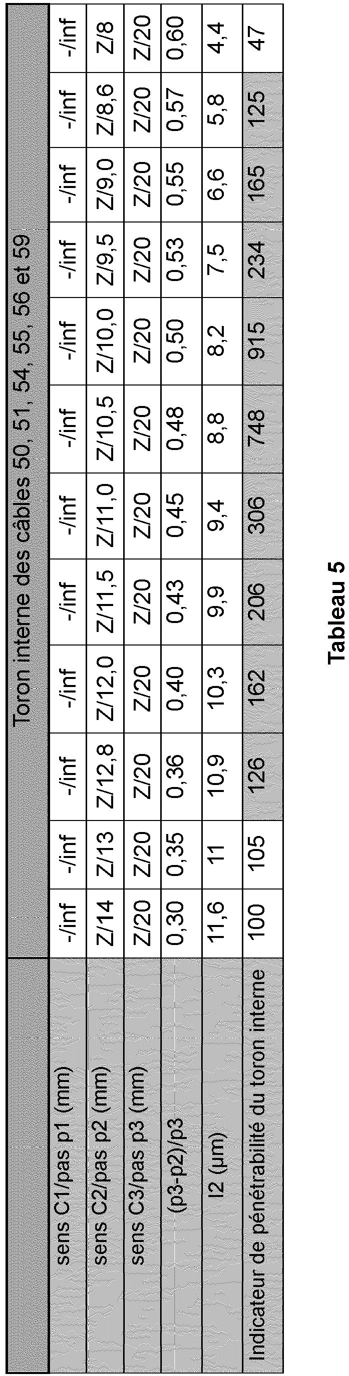

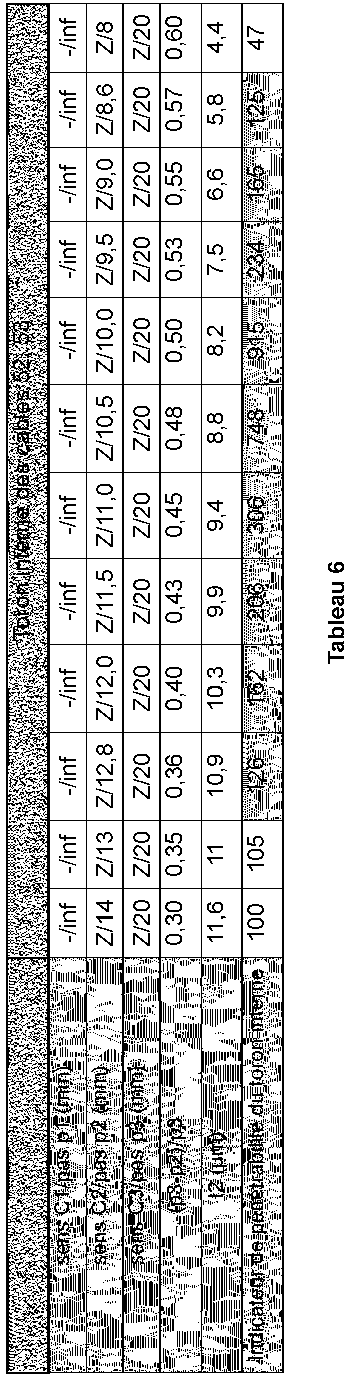

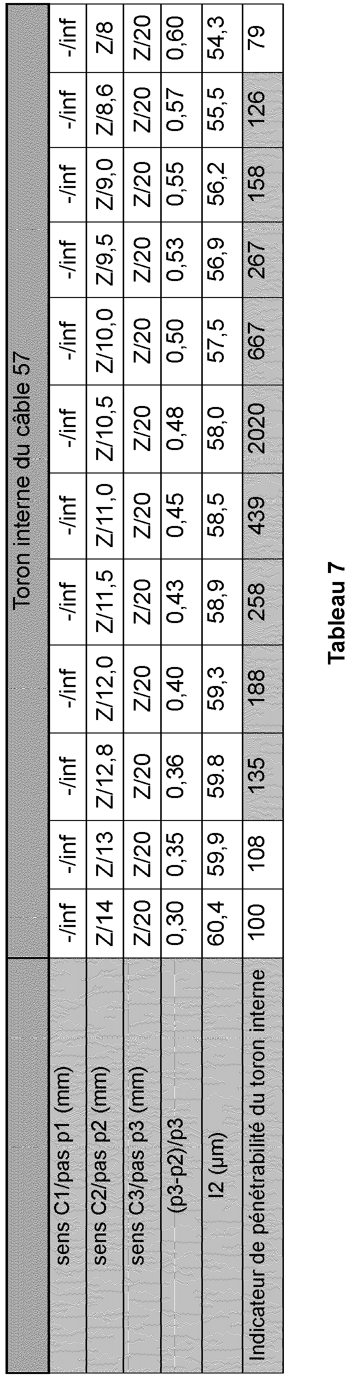

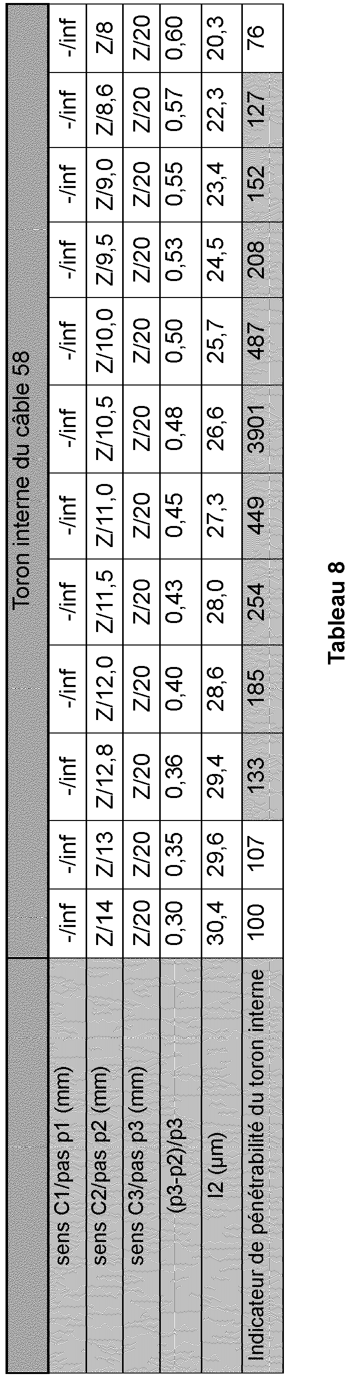

Les tableaux 5 à 8 montrent que, pour des constructions de câbles variées, la pénétration de la composition élastomérique dans le toron interne par cette composition élastomérique, est significativement améliorée pour un rapport (p3-p2)/p3 allant de 0,36 à 0,57, en particulier selon l'invention revendiquée de 0,43 à 0,57, par rapport aux câbles témoins pour lesquels (p3-p2)/p3=0,30.

Bien entendu, l'invention n'est pas limitée aux exemples de réalisation précédemment décrits.

Pour des raisons de faisabilité industrielle, de coût et de performance globale, on préfère mettre en oeuvre l'invention avec des fils linéaires, c'est-à-dire droit, et de section transversale conventionnelle circulaire.

On pourra également combiner les caractéristiques des différents modes de réalisation décrits ou envisagés ci-dessus sous réserve que celles-ci soient compatibles entre elles.

Dans un mode de réalisation non décrit ci-dessus, dans le cas où L=8, DI/DE≥1,60, de préférence DI/DE≥1,65 et plus préférentiellement DI/DE≥1,70 et DI/DE≤2,0, de préférence DI/DE≤1,95 et plus préférentiellement DI/DE≤1,90.

Dans un autre mode de réalisation non décrit ci-dessus, dans le cas où L=9, DI/DE≥2,00, de préférence DI/DE≥2,05 et plus préférentiellement DI/DE≥2,10 et DI/DE≤2,50, de préférence DI/DE≤2,45 et plus préférentiellement DI/DE≤2,40.

Dans le mode de réalisation dans lequel- Q'=3, M'=9, N'=14 ou 15, on pourrait envisager, afin d'augmenter la pénétrabilité de chaque toron externe, que les fils internes de chaque toron externe présentent un diamètre d1' supérieur au diamètre d2' de chaque fil intermédiaire de chaque toron externe, et que les fils internes de chaque toron externe présentent un diamètre d1' supérieur au diamètre d3' de chaque fil externe de chaque toron externe.

Dans un premier mode de réalisation non décrit ci-dessus, dans le cas où chaque toron externe TE est à deux couches ou trois couches, la couche intermédiaire du toron interne est enroulée autour de la couche interne du toron interne selon un sens d'enroulement identique au sens d'enroulement du câble.

Dans une première alternative de ce premier mode de réalisation dans laquelle Q'>1, la couche interne de chaque toron externe est enroulée en hélice selon un sens d'enroulement identique au sens d'enroulement du câble. Dans une deuxième alternative de ce premier mode de réalisation dans laquelle Q'>1, la couche interne de chaque toron externe est enroulée en hélice selon un sens d'enroulement opposé au sens d'enroulement du câble.

Dans un deuxième mode de réalisation du câble non décrit ci-dessus, dans le cas où chaque toron externe TE est à deux couches ou trois couches, la couche intermédiaire du toron interne est enroulée autour de la couche interne du toron interne selon un sens d'enroulement opposé au sens d'enroulement du câble. Dans une première alternative de ce deuxième mode de réalisation dans laquelle Q'>1, la couche interne de chaque toron externe est enroulée en hélice selon un sens d'enroulement identique au sens d'enroulement du câble.

Les sens d'enroulement des modes de réalisation et alternatives envisagées ci-dessus peuvent être indifféremment S ou Z.

## Revendications

1. Câble (50 ; 51 ; 52 ; 53 ; 54 ; 55 ; 56 ; 57 ; 58 ; 59) multi-torons à deux couches, comprenant :
- une couche interne (CI) du câble constituée d'un toron interne (TI) à trois couches (C1, C2, C3) comprenant :
• une couche interne (C1) constituée de Q= 1 fil interne (F1),
• une couche intermédiaire (C2) constituée de M fils intermédiaires (F2) enroulés autour de la couche interne (C1) selon un pas p2, et
• une couche externe (C3) constituée de N fils externes (F3) enroulés autour de la couche intermédiaire (C2) selon un pas p3,
- une couche externe (CE) du câble constituée de L>1 torons externes (TE) à au moins deux couches (C1', C3') comprenant :
• une couche interne (C1') constituée de Q' fil(s) interne(s) (F1'), et
• une couche externe (C3') constituée de N' fils externes (F3') enroulés autour de la couche interne (C1'),
dans lequel:
- la couche externe (CE) du câble est enroulée autour de la couche interne (CI) du câble selon un sens d'enroulement du câble
- la couche externe (CE) du câble est désaturée;
**caractérisé en ce que** ;
- chaque couche externe (C3, C3') de chaque toron interne et externe (TI, TE) est enroulée respectivement autour de la couche intermédiaire (C2) et interne (C1') respectivement de chaque toron interne et externe (TI, TE) selon un même sens d'enroulement opposé au sens d'enroulement du câble ;
- les pas p2 et p3 vérifient :
0,43 ≤ (p3-p2)/p3 ≤ 0,57.

2. Câble (50 ; 51 ; 52 ; 53 ; 54 ; 55 ; 56 ; 57 ; 58 ; 59) selon la revendication précédente, dans lequel 0,45 ≤ (p3-p2)/p3 et p3-p2)/p3 ≤ 0,55 et de préférence (p3-p2)/p3 < 0,53.

3. Câble (50 ; 51 ; 52 ; 53 ; 54 ; 55 ; 56 ; 57 ; 58 ; 59) selon l'une quelconque des revendications précédentes, dans lequel le pas p2 est tel que 8 mm ≤ p2 ≤ 16 mm, de préférence 8 mm ≤ p2 ≤ 14 mm et plus préférentiellement 8 mm ≤ p2 ≤ 12 mm.

4. Câble (50 ; 51 ; 52 ; 53 ; 54 ; 55 ; 56 ; 57 ; 58 ; 59) selon l'une quelconque des revendications précédentes, dans lequel le pas p3 est tel que 10 mm ≤ p3 ≤ 40 mm, de préférence 15 mm ≤ p3 ≤ 35 mm, plus préférentiellement 15 mm ≤ p3 ≤ 25 mm et encore plus préférentiellement 17 mm ≤ p3 ≤ 23 mm.

5. Câble (50 ; 51 ; 52 ; 53 ; 54 ; 55 ; 56 ; 57 ; 58 ; 59) selon l'une quelconque des revendications précédentes, dans lequel le toron interne TI présente un diamètre DI et chaque toron externe TE présente un diamètre DE tels que :
- dans le cas où L=6, DI/DE>1, de préférence DI/DE≥1,05 et plus préférentiellement DI/DE≥1,10, et DI/DE≤1,40 et de préférence DI/DE≤1,35 et plus préférentiellement DI/DE≤1,30,
- dans le cas où L=7, DI/DE≥1,30, de préférence DI/DE≥1,35 et plus préférentiellement DI/DE≥1,40, et DI/DE≤1,70, de préférence DI/DE≤1,65 et plus préférentiellement DI/DE≤1,60,
- dans le cas où L=8, DI/DE≥1,60, de préférence DI/DE≥1,65 et plus préférentiellement DI/DE≥1,70, et DI/DE≤2,0, de préférence DI/DE≤1,95 et plus préférentiellement DI/DE≤1,90,
- dans le cas où L=9, DI/DE≥2,00, de préférence DI/DE≥2,05 et plus préférentiellement DI/DE≥2,10, et DI/DE≤2,50, de préférence DI/DE≤2,45 et plus préférentiellement DI/DE≤2,40.

6. Câble (50 ; 51 ; 52 ; 53 ; 54 ; 55 ; 56 ; 57 ; 58 ; 59) selon l'une quelconque des revendications précédentes, dans lequel la somme SI2 des distances interfils (I2) de la couche intermédiaire (C2) du toron interne (TI) est telle que SI2 < d3 avec d3 étant le diamètre de chaque fil externe (F3) du toron interne (TI), de préférence SI2 ≤ 0,8 x d3.

7. Câble (50 ; 51 ; 52 ; 53 ; 54 ; 55 ; 56 ; 57 ; 58 ; 59) selon l'une quelconque des revendications précédentes, dans lequel la couche intermédiaire (C2) du toron interne (TI) est désaturée, de préférence incomplètement insaturée.

8. Câble (50 ; 51 ; 52 ; 53 ; 54 ; 55 ; 56 ; 57 ; 58 ; 59) selon l'une quelconque des revendications précédentes, dans lequel la couche externe (C3) du toron interne (TI) est désaturée, de préférence complètement insaturée.

9. Câble (50 ; 51 ; 52 ; 53 ; 54 ; 55 ; 56 ; 57 ; 58 ; 59) selon l'une quelconque des revendications précédentes, dans lequel L est égal à 6, 7, 8, 9 ou 10, de préférence L=6, 7 ou 8 et plus préférentiellement L=6.

10. Câble (50 ; 51 ; 52 ; 53 ; 54 ; 55 ; 56 ; 57 ; 58 ; 59) selon l'une quelconque des revendications précédentes, dans lequel Q=1, M= 5 ou 6 et N=10, 11 ou 12, de préférence Q=1, M=5 ou 6, N=10 ou 11 et plus préférentiellement Q=1, M=6 et N=11.

11. Câble (50 ; 51 ; 53 ; 54 ; 55 ; 56 ; 57 ; 58 ; 59) selon l'une quelconque des revendications précédentes, dans lequel chaque fil intermédiaire (F2) du toron interne (TI) présentant un diamètre d2 et chaque fil externe (F3) du toron interne (TI) présentant un diamètre d3, d2=d3.

12. Câble (50 ; 51 ; 52 ; 53 ; 54 ; 55 ; 56 ; 57 ; 58 ; 59) selon l'une quelconque des revendications précédentes, dans lequel la couche externe (C3') de chaque toron externe (TE) est désaturée, de préférence complètement insaturée.

13. Câble (54 ; 55 ; 56 ; 58 ; 59) selon l'une quelconque des revendications 1 à 12, dans lequel chaque toron externe (TE) est à deux couches (C'1, C'3).

14. Câble (50 ; 51 ; 52 ; 53 ; 57 ; 58) selon l'une quelconque des revendications 1 à 12, dans lequel chaque toron externe (TE) est à trois couches (C1', C2', C3') et comprend :
• une couche intermédiaire (C2') constituée de M' fils intermédiaires (F2') enroulés autour de la couche interne (C1'), et
• une couche externe (C3') constituée de N' fils externes (F3') enroulés autour de la couche intermédiaire (C2').

15. Pneumatique (10), **caractérisé en ce qu'**il comprend au moins un (50 ; 51 ; 52 ; 53 ; 54 ; 55 ; 56 ; 57 ; 58 ; 59) selon l'une quelconque des revendications précédentes.

## Patentansprüche

1. Seil (50; 51; 52; 53; 54; 55; 56; 57; 58; 59) mit mehreren Litzen und mit zwei Lagen, beinhaltend:
- eine innere Lage (CI) des Seils, die aus einer inneren Litze (TI) mit drei Lagen (C1, C2, C3) besteht, beinhaltend:
• eine innere Lage (C1), die aus Q= 1 inneren Draht (F1) besteht,
• eine Zwischenlage (C2), die aus M Zwischendrähten (F2) besteht, die gemäß einer Schrittweite p2 um die innere Lage (C1) gewickelt sind, und
• eine äußere Lage (C3), die aus N äußeren Drähten (F3) besteht, die gemäß einer Schrittweite p3 um die Zwischenlage (C2) gewickelt sind,
- eine äußere Lage (CE) des Seils, die aus L>1 äußeren Litzen (TE) mit mindestens zwei Lagen (C1', C3') besteht, beinhaltend:
• eine innere Lage (C1'), die aus einem oder mehreren Q' inneren Drähten (F1') besteht, und
- eine äußere Lage (C3'), die aus N' äußeren Drähten (F3') besteht, die um die innere Lage (C1') gewickelt sind,
wobei:
- die äußere Lage (CE) des Seils gemäß einer Wickelrichtung des Seils um die innere Lage (CI) des Seils gewickelt ist,
- die äußere Lage (CE) des Seils entsättigt ist; **dadurch gekennzeichnet, dass**;
- jede äußere Lage (C3, C3') jeder inneren und äußeren Litze (TI, TE) gemäß einer gleichen Wickelrichtung, die zu der Wickelrichtung des Seils entgegengesetzt ist, um die Zwischenlage (C2) bzw. die innere Lage (C1') jeder inneren bzw. äußeren Litze (TI, TE) gewickelt ist;
- die Schrittweiten p2 und p3 Folgendes erfüllen: 0,43 ≤ (p3-p2)/p3 ≤ 0,57.

2. Seil (50; 51; 52; 53; 54; 55; 56; 57; 58; 59) nach dem vorhergehenden Anspruch, wobei 0,45 ≤ (p3-p2)/p3 und p3-p2)/p3 ≤ 0,55 und vorzugsweise (p3-p2)/p3 ≤ 0,53.

3. Seil (50; 51; 52; 53; 54; 55; 56; 57; 58; 59) nach einem beliebigen der vorhergehenden Ansprüche, wobei die Schrittweite p2 derart ist, dass 8 mm ≤ p2 ≤ 16 mm, vorzugsweise 8 mm ≤ p2 ≤ 14 mm und noch bevorzugter 8 mm ≤ p2 ≤ 12 mm.

4. Seil (50; 51; 52; 53; 54; 55; 56; 57; 58; 59) nach einem beliebigen der vorhergehenden Ansprüche, wobei die Schrittweite p3 derart ist, dass 10 mm ≤ p3 ≤ 40 mm, vorzugsweise 15 mm ≤ p3 ≤ 35 mm, noch bevorzugter 15 mm ≤ p3 ≤ 25 mm und sogar noch bevorzugter 17 mm ≤ p3 ≤ 23 mm.

5. Seil (50; 51; 52; 53; 54; 55; 56; 57; 58; 59) nach einem beliebigen der vorhergehenden Ansprüche, wobei die innere Litze TI einen Durchmesser DI aufweist und jede äußere Litze TE einen Durchmesser DE aufweist, derart, dass:
- in dem Fall, in dem L=6, DI/DE>1, vorzugsweise DI/DE≥1,05 und noch bevorzugter DI/DE≥1,10, und DI/DE≤1,40 und vorzugsweise DI/DE≤1,35 und noch bevorzugter DI/DE≤1,30,
- in dem Fall, in dem L=7, DI/DE≥1,30, vorzugsweise DI/DE≥1,35 und noch bevorzugter DI/DE≥1,40, und DI/DE≤1,70, vorzugsweise DI/DE≤1,65 und noch bevorzugter DI/DE≤1,60,
- in dem Fall, in dem L=8, DI/DE≥1,60, vorzugsweise DI/DE≥1,65 und noch bevorzugter DI/DE≥1,70, und DI/DE≤2,0, vorzugsweise DI/DE≤1,95 und noch bevorzugter DI/DE≤1,90,
- in dem Fall, in dem L=9, DI/DE≥2,00, vorzugsweise DI/DE≥2,05 und noch bevorzugter DI/DE≥2,10, und DI/DE≤2,50, vorzugsweise DI/DE≤2,45 und noch bevorzugter DI/DE≤2,40.

6. Seil (50; 51; 52; 53; 54; 55; 56; 57; 58; 59) nach einem beliebigen der vorhergehenden Ansprüche, wobei die Summe SI2 aus den Abständen zwischen den Drähten (I2) der Zwischenlage (C2) der inneren Litze (TI) derart ist, dass SI2 < d3, wobei d3 der Durchmesser jedes äußeren Drahtes (F3) der inneren Litze (TI) ist, vorzugsweise SI2 ≤ 0,8 x d3.

7. Seil (50; 51; 52; 53; 54; 55; 56; 57; 58; 59) nach einem beliebigen der vorhergehenden Ansprüche, wobei die Zwischenlage (C2) der inneren Litze (TI) entsättigt, vorzugsweise unvollständig ungesättigt ist.

8. Seil (50; 51; 52; 53; 54; 55; 56; 57; 58; 59) nach einem beliebigen der vorhergehenden Ansprüche, wobei die äußere Lage (C3) der inneren Litze (TI) entsättigt, vorzugsweise vollständig ungesättigt ist.

9. Seil (50; 51; 52; 53; 54; 55; 56; 57; 58; 59) nach einem beliebigen der vorhergehenden Ansprüche, wobei L gleich 6, 7, 8, 9 oder 10 ist, vorzugsweise L=6, 7 oder 8 und noch bevorzugter L=6.

10. Seil (50; 51; 52; 53; 54; 55; 56; 57; 58; 59) nach einem beliebigen der vorhergehenden Ansprüche, wobei Q=1, M= 5 oder 6 und N=10, 11 oder 12, vorzugsweise Q=1, M=5 oder 6, N=10 oder 11 und noch bevorzugter Q=1, M=6 und N=11.

11. Seil (50; 51; 53; 54; 55; 56; 57; 58; 59) nach einem beliebigen der vorhergehenden Ansprüche, wobei jeder Zwischendraht (F2) der inneren Litze (TI) einen Durchmesser d2 aufweist und jeder äußere Draht (F3) der inneren Litze (TI) einen Durchmesser d3 aufweist, d2=d3.

12. Seil (50; 51; 52; 53; 54; 55; 56; 57; 58; 59) nach einem beliebigen der vorhergehenden Ansprüche, wobei die äußere Lage (C3') jeder äußeren Litze (TE) entsättigt, vorzugsweise vollständig ungesättigt ist.

13. Seil (54; 55; 56; 58; 59) nach einem beliebigen der Ansprüche 1 bis 12, wobei jede äußere Litze (TE) zwei Lagen (C'1, C'3) besitzt.

14. Seil (50; 51; 52; 53; 57; 58) nach einem beliebigen der Ansprüche 1 bis 12, wobei jede äußere Litze (TE) drei Lagen (C1', C2', C3') besitzt und Folgendes beinhaltet:
• eine Zwischenlage (C2'), die aus M' Zwischendrähten (F2') besteht, die um die innere Lage (C1') gewickelt sind, und
• eine äußere Lage (C3'), die aus N' äußeren Drähten (F3') besteht, die um die Zwischenlage (C2') gewickelt sind.

15. Reifen (10), **dadurch gekennzeichnet, dass** er mindestens ein (50; 51; 52; 53; 54; 55; 56; 57; 58; 59) nach einem beliebigen der vorhergehenden Ansprüche beinhaltet.

## Claims

1. Two-layer multi-strand cord (50; 51; 52; 53; 54; 55; 56; 57; 58; 59), comprising:
- an internal layer (CI) of the cord made up of an internal strand (Tl) having three layers (C1, C2, C3) comprising:
• an internal layer (C1) made up of Q=1 internal wire (F1),
• an intermediate layer (C2) made up of M intermediate wires (F2) wound around the internal layer (C1) with a pitch p2, and
• an external layer (C3) made up of N external wires (F3) wound around the intermediate layer (C2) with a pitch p3,
- an external layer (CE) of the cord made up of L>1 external strands (TE) having at least two layers (C1', C3') comprising:
• an internal layer (C1') made up of Q' internal wire(s) (F1') and
• an external layer (C3') made up of N' external wires (F3') wound around the internal layer (C1'),
in which:
- the external layer (CE) of the cord is wound around the internal layer (CI) of the cord in a direction of winding of the cord;
- the external layer (CE) of the cord is desaturated;
**Characterized in that**:
- each external layer (C3, C3') of each internal and external strand (Tl, TE) is wound respectively around the intermediate (C2) and internal (C1') layer of each internal and external strand (Tl, TE) respectively in a same direction of winding that is the opposite of the direction of winding of the cord;
, and
- the pitches p2 and p3 satisfy the relationship:
0,43 ≤ (p3-p2)/p3 ≤ 0.57.

2. Cord (50; 51; 52; 53; 54; 55; 56; 57; 58; 59) according to the preceding claim, in which 0,45 ≤ (p3-p2)/p3 and (p3-p2)/p3 ≤ 0.55; for preference (p3-p2)/p3 ≤ 0,53.

3. Cord (50; 51; 52; 53; 54; 55; 56; 57; 58; 59) according to any one of the preceding claims, in which the pitch p2 is such that 8 mm ≤ p2 ≤ 16 mm, for preference 8 mm ≤ p2 ≤ 14 mm, and more preferably, 8 mm ≤ p2 ≤ 12 mm.

4. Cord (50; 51; 52; 53; 54; 55; 56; 57; 58; 59) according to any one of the preceding claims, in which the pitch p3 is such that 10 mm ≤ p3 ≤ 40 mm, for preference 15 mm ≤ p3 ≤ 35 mm, more preferably, 15 mm ≤ p3 ≤ 25 mm, and more preferably still, 17 mm ≤ p3 ≤ 23 mm.

5. Cord (50; 51; 52; 53; 54; 55; 56; 57; 58; 59) according to any one of the preceding claims, in which the internal strand TI has a diameter DI and each external strand TE has a diameter DE which are such that:
- in instances in which L=6, DI/DE≥1, for preference DI/DE≥1.05 and more preferably DI/DE≥1.10 and DI/DE≤1.40, for preference DI/DE≤1.35 and more preferably DI/DE≤1.30,
- in instances in which L=7, DI/DE≥1.30, for preference DI/DE≥1.35 and more preferably DI/DE≥1.40, and DI/DE≤1.70, for preference DI/DE≤1.65 and more preferably DI/DE≤1.60;
- in instances in which L=8, DI/DE≥1.60, for preference DI/DE≥1.65 and more preferably DI/DE≥1.70, and DI/DE≤2.0, for preference DI/DE≤1.95 and more preferably DI/DE≤1.90;
- in instances in which L=9, DI/DE≥2.00, for preference DI/DE≥2.05 and more preferably DI/DE≥2.10 and DI/DE≤2.50, for preference DI/DE≤2.45 and more preferably DI/DE≤2.40.

6. Cord (50; 51; 52; 53; 54; 55; 56; 57; 58; 59) according to any one of the preceding claims, in which the sum SI2 of the inter-wire distances (I2) of the intermediate layer (C2) of the internal strand (Tl) is such that SI2 < d3 where d3 is the diameter of each external wire (F3) of the internal strand (TI), preferably SI2 ≤ 0.8 x d3.

7. Cord (50; 51; 52; 53; 54; 55; 56; 57; 58; 59) according to any one of the preceding claims, in which the intermediate layer (C2) of the internal strand (Tl) is desaturated, preferably completely unsaturated.

8. Cord (50; 51; 52; 53; 54; 55; 56; 57; 58; 59) according to any one of the preceding claims, in which the external layer (C3) of the internal strand (Tl) is desaturated, preferably completely unsaturated.

9. Cord (50; 51; 52; 53; 54; 55; 56; 57; 58; 59) according to any one of the preceding claims, in which L is equal to 6, 7, 8, 9 or 10, for preference L=6, 7 or 8 and more preferably, L=6.

10. Cord (50; 51; 52; 53; 54; 55; 56; 57; 58; 59) according to any one of the preceding claims, in which Q=1, M= 5 or 6 and N=10, 11 or 12, for preference Q=1, M=5 or 6 and N=10 or 11 and more preferably, Q=1, M=6 and N=11.

11. Cord (50; 51; 53; 54; 56; 57; 58; 59) according to any one of the preceding claims, in which, with each intermediate wire (F2) of the internal strand (Tl) having a diameter d2, and each external wire (F3) of the internal strand (Tl) having a diameter d3, d2=d3.

12. Cord (50; 51; 52; 53; 54; 55; 56; 57; 58; 59) according to any one of the preceding claims, in which the external layer (C3') of each external strand (TE) is desaturated, preferably completely unsaturated.

13. Cord (54; 55; 56; 58; 59) according to any one of Claims 1 to 12, in which each external strand (TE) has two layers (C'1, C'3).

14. Cord (50; 51; 52; 53; 57; 58) according to any one of Claims 1 to 12, in which each external strand (TE) has three layers (C1' C2' C3') and comprises:
• an intermediate layer (C2') made up of M' intermediate wires (F2') wound around the internal layer (C1'), and
• an external layer (C3') made up of N' external wires (F3') wound around the intermediate layer (C2').

15. Tyre (10), **characterized in that** it comprises at least one (50; 51; 52; 53; 54; 55; 56; 57; 58; 59) according to any one of the preceding claims.
